# EUROPEAN PATENT APPLICATION

(11) **EP 4 207 644 A1**
(43) Date of publication of application: **05.07.2023**
(21) Application number: 21871614.0
(22) Date of filing: 24.09.2021

(54) **MESSAGE TRANSMISSION METHOD AND APPARATUS, DEVICE, AND COMPUTER READABLE STORAGE MEDIUM**

(30) Priority: 25.09.2020 CN 202011026720; 14.01.2021 CN 202110049132
(71) Applicant: Huawei Technologies Co., Ltd., Shenzhen, Guangdong 518129 (CN)
(72) Inventor: FENG, Ligang, Shenzhen, Guangdong 518129 (CN); WANG, Xiaofei, Shenzhen, Guangdong 518129 (CN)
(74) Representative: Körber, Martin Hans
(86) International application number: PCT/CN2021/120430
(87) International publication number: WO 2022/063245

(57) **Abstract**

This application discloses a packet transmission method, an apparatus, a device, and a computer-readable storage medium, and belongs to the field of communication technologies. For example, the method is applied to a first device. The method includes: The first device receives a first packet, where the first packet includes quality guarantee indication information and information about a first application, and the first packet belongs to the first application for which quality guarantee needs to be provided. The first device stores a correspondence between the information about the first application and the quality guarantee indication information based on the received first packet. After receiving a second packet including the information about the first application, the first device provides quality guarantee for the second packet based on the stored correspondence. Therefore, based on the quality guarantee indication information carried in the first packet, the first device can obtain corresponding application information from the second packet even if a processing capability is weak, so that network quality guarantee can be provided.

## Description

This application claims priorities to Chinese Patent Application No. 202011026720.7, filed on September 25, 2020 and entitled "PACKET PROCESSING METHOD, APPARATUS, AND SYSTEM", and to Chinese Patent Application No. 202110049132.3, filed on January 14, 2021 and entitled "PACKET TRANSMISSION METHOD, APPARATUS, DEVICE, AND COMPUTER-READABLE STORAGE MEDIUM", both of which are incorporated herein by reference in their entireties.

### TECHNICAL FIELD

This application relates to the field of communication technologies, and in particular, to a packet transmission method, an apparatus, a device, and a computer-readable storage medium.

### BACKGROUND

With continuous development of communication technologies, it is possible to perform differentiated transmission of packets with different service level agreement (service level agreement, SLA) requirements. In a differentiated transmission process, an application corresponding to a packet is first identified, and then an SLA requirement is determined based on the application corresponding to the packet. In this way, appropriate network quality guarantee is provided based on the SLA requirement.

In a related technology, the application corresponding to the packet may be identified through deep packet inspection (deep packet inspection, DPI) or artificial intelligence (artificial intelligence, AI), and the SLA requirement is determined based on the application corresponding to the packet, to provide network quality guarantee.

However, both DPI and AI depend on a strong processing capability. For a communication device with a weak processing capability, identification may fail due to an insufficient processing capability, and consequently it is difficult to implement subsequent differentiated transmission.

### SUMMARY

Embodiments of this application provide a packet transmission method, an apparatus, a device, and a computer-readable storage medium, to resolve a problem in a related technology. Technical solutions are as follows.

According to a first aspect, a packet transmission method is provided. The method includes: A first device receives a first packet, where the first packet includes quality guarantee indication information and information about a first application, and the first packet belongs to the first application for which quality guarantee needs to be provided. The first device stores a correspondence between the information about the first application and the quality guarantee indication information based on the received first packet. After receiving a second packet including the information about the first application, the first device provides quality guarantee for the second packet based on the stored correspondence.

The first device stores the correspondence between the quality guarantee indication information and the information about the first application based on the first packet, and obtains the information about the first application from the second packet based on the quality guarantee indication information, to provide network quality guarantee for the second packet. Therefore, even if a processing capability of the first device is weak, network quality guarantee can be provided, and application-based differentiated transmission is implemented.

In a possible implementation, the quality guarantee indication information includes a service level agreement SLA requirement and/or an SLA guarantee identifier. The quality guarantee indication information includes three different cases, and the first device can perform application identification by using a weak processing capability in any one of the cases. This is flexible.

In a possible implementation, the first packet includes an internet protocol version 6 IPv6 packet, and the quality guarantee indication information is located in a packet header of the IPv6 packet. Because the quality guarantee indication information is located in the packet header of the IPv6 packet, the first device can obtain the quality guarantee indication information by parsing only the packet header, and does not need to perform deep parsing on the packet. Therefore, a strong processing capability is not required in a parsing process.

In a possible implementation, the quality guarantee indication information is located in an application-aware IPv6 networking APN6 packet header of the IPv6 packet, and the APN6 packet header is located in an IPv6 extension header. The IPv6 extension header includes the APN6 packet header, and the quality guarantee indication information is located in the APN6 packet header. This provides a more flexible manner of carrying the quality guarantee indication information in the first packet.

In a possible implementation, the APN6 packet header includes an APN6 basic header, and the quality guarantee indication information is located in the APN6 basic header; or the APN6 packet header includes an APN6 parameter extension header, and the quality guarantee indication information is located in the APN6 extension header. The APN6 packet header includes two different packet headers, and the quality guarantee indication information can be located in any packet header included in the APN6 packet header.

In a possible implementation, the quality guarantee indication information includes the SLA requirement and the SLA guarantee identifier, the APN6 packet header includes an APN6 basic header and an APN6 parameter extension header, the SLA requirement is located in the APN6 basic header, and the SLA guarantee identifier is located in the APN6 parameter extension header; or the SLA requirement is located in the APN6 parameter extension header, and the SLA guarantee identifier is located in the APN6 basic header. The SLA requirement and the SLA guarantee identifier are respectively located in two different packet headers included in the APN6 packet header. This provides a more flexible manner of carrying the quality guarantee indication information in the APN6 packet header.

In a possible implementation, the information about the first application includes transmission information of the first packet, and the transmission information of the first packet includes IP tuple information of the first packet. Because the IP tuple information is information carried in all types of packets, the IP tuple information is used as the information about the first application, so that in this application, in addition to the quality guarantee indication information, other special information does not need to be additionally encapsulated into the first packet, so that network quality guarantee can be provided.

In a possible implementation, the providing quality guarantee for the second packet based on the correspondence includes: The first device determines, based on the quality guarantee indication information, a forwarding path corresponding to the first application, and sends the second packet on the forwarding path. The forwarding path determined based on the quality guarantee indication information can provide appropriate quality guarantee. Therefore, sending the second packet based on the forwarding path can provide quality guarantee for the second packet.

In a possible implementation, before the providing quality guarantee for the second packet based on the correspondence, the method further includes: encapsulating the quality guarantee indication information into the second packet. The quality guarantee indication information is carried in the second packet, so that each hop device after the first device can perform QoS scheduling based on the quality guarantee indication information, or reselect a path for the second packet.

In a possible implementation, the information about the first application includes a first identifier, the first identifier includes at least one of the following: an application identifier, a user identifier, and a flow identifier, the application identifier identifies the first application, the user identifier identifies a user corresponding to the first packet, and the flow identifier identifies a packet flow corresponding to the first packet. The first device can perform traffic analysis based on the first identifier, to select a traffic management policy based on a traffic analysis result, to perform appropriate control and scheduling on the first packet according to the traffic management policy.

In a possible implementation, the first packet received by the first device is sent by a second device, and the providing quality guarantee for the second packet based on the correspondence includes: The first device sends the second packet to the second device. Because the first packet is sent by the second device, when forwarding the second packet, the first device correspondingly sends the second packet to the second device, to implement packet interaction between the first device and the second device.

According to a second aspect, a packet transmission method is provided. The method includes:
A first device obtains a first packet.

The first device determines that the first packet belongs to a first application for which quality guarantee needs to be provided.

The first device updates the first packet to obtain a second packet, where the second packet includes quality guarantee indication information.

The first device sends the second packet to a second device, where the quality guarantee indication information indicates the second device to obtain information about the first application from the first packet, and provide quality guarantee for the packet belonging to the first application.

Because the first device has an application identification capability, after identifying that the first packet belongs to the first application, the first device can send, to the second device, the second packet carrying the quality guarantee indication information. Therefore, based on the quality guarantee indication information carried in the second packet, the second device can obtain corresponding application information from the second packet even if a processing capability is weak, to provide network quality guarantee for the application based on the obtained application information and the quality guarantee indication information.

In a possible implementation, the quality guarantee indication information includes a service level agreement SLA requirement and/or an SLA guarantee identifier. The quality guarantee indication information includes three different cases, and the second device can implement application identification by using a weak processing capability in any one of the cases. This is flexible.

In a possible implementation, that the first device updates the first packet to obtain a second packet further includes: The first device obtains a first identifier of the first application, where the first identifier includes at least one of the following: an application identifier, a user identifier, and a flow identifier; and encapsulates the first identifier into the second packet, where the application identifier identifies an application corresponding to the first packet, the user identifier identifies a user corresponding to the first packet, the flow identifier identifies a packet flow corresponding to the first packet, and the information about the first application includes the first identifier. In addition to the quality guarantee indication information, the second packet further carries the first identifier, so that the second device performs traffic management based on the first identifier.

According to a third aspect, a packet transmission network system is provided. The network system includes a first device and a second device.

The first device is configured to obtain a first packet, and determine that the first packet belongs to a first application for which quality guarantee needs to be provided;
the first device is further configured to update the first packet to obtain a second packet, where the second packet includes quality guarantee indication information; and
the first device is further configured to send the second packet to the second device.

The second device is configured to receive the second packet;
the second device is further configured to store, based on the second packet, a correspondence between information about the first application and the quality guarantee indication information that are included in the second packet;
the second device is further configured to receive a third packet, where the third packet includes the information about the first application; and
the second device is further configured to provide quality guarantee for the third packet based on the correspondence.

In a possible implementation, the first device is further configured to: obtain a first identifier of the first application, where the first identifier includes at least one of the following: an application identifier, a user identifier, and a flow identifier; and encapsulate the first identifier into the second packet, where the application identifier identifies an application corresponding to the first packet, the user identifier identifies a user corresponding to the first packet, the flow identifier identifies a packet flow corresponding to the first packet, and the information about the first application includes the first identifier.

In a possible implementation, the second packet received by the second device is sent by the first device, and the second device is configured to send the third packet to the first device.

For technical effects of the third aspect and the possible implementations of the third aspect, refer to technical effects of the first aspect and the second aspect. Details are not described herein again.

According to a fourth aspect, a packet transmission apparatus is provided. The apparatus includes:
a receiving module, configured to receive a first packet by a first device, where the first packet includes quality guarantee indication information and information about a first application, and the first packet belongs to the first application;
a storage module, configured to store a correspondence between the information about the first application and the quality guarantee indication information based on the first packet, where
the receiving module is further configured to receive a second packet by the first device, where the second packet includes the information about the first application; and
a guarantee module, configured to provide quality guarantee for the second packet based on the correspondence.

In a possible implementation, the quality guarantee indication information includes a service level agreement SLA requirement and/or an SLA guarantee identifier.

In a possible implementation, the first packet includes an internet protocol version 6 IPv6 packet, and the quality guarantee indication information is located in a packet header of the IPv6 packet.

In a possible implementation, the quality guarantee indication information is located in an application-aware IPv6 networking APN6 packet header of the IPv6 packet, and the APN6 packet header is located in an IPv6 extension header.

In a possible implementation, the APN6 packet header includes an APN6 basic header, and the quality guarantee indication information is located in the APN6 basic header; or
the APN6 packet header includes an APN6 parameter extension header, and the quality guarantee indication information is located in the APN6 extension header.

In a possible implementation, the quality guarantee indication information includes the SLA requirement and the SLA guarantee identifier, the APN6 packet header includes an APN6 basic header and an APN6 parameter extension header, the SLA requirement is located in the APN6 basic header, and the SLA guarantee identifier is located in the APN6 parameter extension header; or
the SLA requirement is located in the APN6 parameter extension header, and the SLA guarantee identifier is located in the APN6 basic header.

In a possible implementation, the information about the first application includes transmission information of the first packet, and the transmission information of the first packet includes IP tuple information of the first packet.

In a possible implementation, the guarantee module is configured to: determine, by the first device based on the quality guarantee indication information, a forwarding path corresponding to the first application, and send the second packet on the forwarding path.

In a possible implementation, the apparatus further includes: an encapsulation module, configured to encapsulate the quality guarantee indication information into the second packet.

In a possible implementation, the information about the first application includes a first identifier, the first identifier includes at least one of the following: an application identifier, a user identifier, and a flow identifier, the application identifier identifies the first application, the user identifier identifies a user corresponding to the first packet, and the flow identifier identifies a packet flow corresponding to the first packet.

In a possible implementation, the first packet received by the first device is sent by a second device, and the guarantee module is configured to send the second packet to the second device by the first device.

Notably, for technical effects of the fourth aspect and the possible implementations of the fourth aspect, refer to technical effects of the first aspect and the possible implementations of the first aspect. Details are not described herein again.

According to a fifth aspect, a packet transmission apparatus is provided. The apparatus includes:
an obtaining module, configured to obtain a first packet by a first device;
a determining module, configured to determine that the first packet belongs to a first application for which quality guarantee needs to be provided by the first device;
an update module, configured to update, by the first device, the first packet to obtain a second packet, where the second packet includes quality guarantee indication information; and
a sending module, configured to send the second packet to a second device by the first device, where the quality guarantee indication information indicates the second device to obtain information about the first application from the first packet, and provide quality guarantee for the packet belonging to the first application.

In a possible implementation, the quality guarantee indication information includes a service level agreement SLA requirement and/or an SLA guarantee identifier.

In a possible implementation, the update module is further configured to: obtain a first identifier of the first application by the first device, where the first identifier includes at least one of the following: an application identifier, a user identifier, and a flow identifier; and encapsulate the first identifier into the second packet, where the application identifier identifies an application corresponding to the first packet, the user identifier identifies a user corresponding to the first packet, the flow identifier identifies a packet flow corresponding to the first packet, and the information about the first application includes the first identifier.

Notably, for technical effects of the fifth aspect and the possible implementations of the fifth aspect, refer to technical effects of the second aspect and the possible implementations of the second aspect. Details are not described herein again.

According to a sixth aspect, a communication device is provided. The device includes a communication interface and a processor. Optionally, the communication device further includes a memory. The communication interface, the memory, and the processor communicate with each other through an internal connection channel. The memory is configured to store instructions. The processor is configured to execute the instructions stored in the memory, to control the communication interface to receive a signal, and control the communication interface to send a signal. In addition, when the processor executes the instructions stored in the memory, the processor is enabled to perform the method according to any one of the first aspect or the possible implementations of the first aspect.

According to a seventh aspect, a communication device is provided. The device includes a communication interface and a processor. Optionally, the communication device further includes a memory. The communication interface, the memory, and the processor communicate with each other through an internal connection channel. The memory is configured to store instructions. The processor is configured to execute the instructions stored in the memory, to control the communication interface to receive a signal, and control the communication interface to send a signal. In addition, when the processor executes the instructions stored in the memory, the processor is enabled to perform the method according to any one of the second aspect or the possible implementations of the second aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, for example, a read-only memory (read-only memory, ROM). The memory and the processor may be integrated on a same chip, or may be disposed on different chips. A type of the memory and a manner of disposing the memory and the processor are not limited in this application.

According to an eighth aspect, a communication device is provided. The communication device includes a processor and a communication interface. The processor executes instructions, so that the communication device performs the packet transmission method according to any one of the first aspect or the possible implementations of the first aspect, or implements the packet transmission method according to any one of the second aspect or the possible implementations of the second aspect.

According to a ninth aspect, a communication system is provided. The system includes a first communication device and a second communication device. The first communication device is configured to perform the method according to any one of the first aspect or the possible implementations of the first aspect, and the second communication device is configured to perform the method according to any one of the second aspect or the possible implementations of the second aspect.

According to a tenth aspect, a computer program (product) is provided. The computer program (product) includes computer program code. When the computer program code is run by a computer, the computer is enabled to perform the methods in the foregoing aspects.

According to an eleventh aspect, a computer-readable storage medium is provided. The computer-readable storage medium stores a program or instructions; and when the program or the instructions are run on a computer, the methods in the foregoing aspects are performed.

According to a twelfth aspect, a chip is provided. The chip includes a processor, configured to invoke and run instructions stored in a memory, so that a communication device in which the chip is installed performs the methods in the foregoing aspects.

According to a thirteenth aspect, a chip is provided. The chip includes an input interface, an output interface, a processor, and a memory. The input interface, the output interface, the processor, and the memory are connected to each other through an internal connection channel. The processor is configured to execute code in the memory. When the code is executed, the processor is configured to perform the methods in the foregoing aspects.

### BRIEF DESCRIPTION OF DRAWINGS

FIG. 1 is a schematic diagram of an implementation environment according to this application;
FIG. 2 is a flowchart of a packet transmission method according to this application;
FIG. 3 is a schematic diagram of a structure of a packet header according to this application;
FIG. 4 is a schematic diagram of a structure of a packet header according to this application;
FIG. 5 is a schematic diagram of a structure of a packet header according to this application;
FIG. 6 is a schematic diagram of a structure of a packet header according to this application;
FIG. 7 is a schematic diagram of a structure of a packet header according to this application;
FIG. 8 is a schematic diagram of a structure of a packet header according to this application;
FIG. 9 is a schematic diagram of a structure of a field according to this application;
FIG. 10 is a schematic diagram of a structure of a field according to this application;
FIG. 11 is a schematic flowchart of packet transmission according to this application;
FIG. 12 is a schematic diagram of traffic management according to this application;
FIG. 13 is a schematic flowchart of packet transmission according to this application;
FIG. 14 is a schematic flowchart of packet transmission according to this application;
FIG. 15 is a schematic flowchart of packet transmission according to this application;
FIG. 16 is a schematic flowchart of packet transmission according to this application;
FIG. 17 is a schematic flowchart of packet transmission according to this application;
FIG. 18 is a schematic diagram of a structure of a packet transmission apparatus according to this application;
FIG. 19 is a schematic diagram of a structure of a packet transmission apparatus according to this application;
FIG. 20 is a schematic diagram of a structure of a communication device according to this application;
FIG. 21 is a schematic diagram of a structure of a communication device according to this application; and
FIG. 22 is a schematic diagram of a structure of a communication system according to this application.

### DESCRIPTION OF EMBODIMENTS

Terms used in embodiments of this application are merely used to explain specific implementations of this application, but are not intended to limit this application.

With continuous development of communication technologies, it is possible to perform differentiated transmission of packets with different SLA requirements. In a differentiated transmission process, an application corresponding to a packet is first identified, and then an appropriate transmission mode is selected based on an SLA requirement corresponding to the application for packet transmission. Operators provide a differentiated transmission service in a broadband package, facilitating improvement of user experience.

Both DPI and AI depend on a strong processing capability of a device. For a device with a weak processing capability, application identification may fail due to an insufficient processing capability, and consequently it is difficult to provide subsequent network quality guarantee.

This application provides a packet transmission method. The method may be applied to an implementation environment including a core device and an edge device. The core device has a strong processing capability, and is configured to perform application identification in a manner provided in a related technology, and include quality guarantee indication information in a downlink packet corresponding to an application. Correspondingly, the edge device is configured to store a correspondence between information about the application and the quality guarantee indication information based on the downlink packet. After receiving an uplink packet that includes the information about the application, the edge device can provide quality guarantee for the uplink packet based on the stored correspondence. In this way, the edge device can perform application identification on the subsequent uplink packet even if the edge device has a weak processing capability, so that network quality guarantee can be provided based on the application, and it is possible to perform differentiated transmission.

For example, the processing capability of the edge device too weak to support the edge device in performing application identification in the manner provided in the related technology. Therefore, the edge device performs application identification only based on the stored correspondence. Alternatively, the processing capability of the edge device is strong enough to support application identification in the manner provided in the related technology, but the edge device needs to preferentially ensure normal running of another service due to service particularity. In this case, the edge device performs application identification only by using a remaining processing capability, where the application identification is performed only based on the stored correspondence. Alternatively, the processing capability of the edge device is strong enough to support application identification in the manner provided in the related technology, but the edge device is configured to perform application identification based on the stored correspondence.

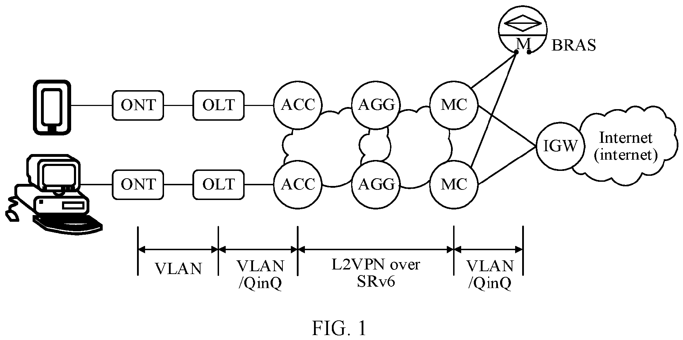

FIG. 1 is a schematic diagram of an example implementation environment. In FIG. 1, there are sequentially a terminal, an optical network terminal (Optical Network Terminal, ONT), and an optical line terminal (Optical Line Terminal, OLT), which are communicatively connected. The OLT is connected to a broadband remote access server (broadband remote access server, BRAS) through an internet protocol radio access network (Internet Protocol radio access network, IPRAN). The IPRAN includes an access router (access router, ACC), an aggregation node (aggregation node, AGG), and a metro core (metro core, MC). In addition to being communicatively connected to the BRAS, the MC can also be communicatively connected to an internet gateway (internet gateway, IGW). The implementation environment shown in FIG. 1 is also referred to as a BRAS highly-mounted scenario.

Among the devices shown in FIG. 1, there is a virtual local area network (virtual local area network, VLAN) between the ONT and the OLT. There is a VLAN between the OLT and the ACC, or included in 802.1Q-in-802.1Q (802.1Q-in-802.1Q, QinQ). 802.1Q in 802.1Q are standard specifications defined by the Institute of Electrical and Electronics Engineers (Institute of Electrical and Electronics Engineers, IEEE). QinQ is also referred to a stacked (stacked) VLAN or a double (double) VLAN. There is a layer 2 virtual private network (layer 2 virtual private network, L2VPN) between the ACC and the MC, and the L2VPN is carried on internet protocol version 6 (internet protocol version 6, IPv6)-based segment routing (Segment Routing IPv6, SRv6). In other words, there is a L2VPN over SRv6 (L2VPN over SRv6) the ACC and MC. In addition, there is the VLAN or QinQ between the MC and IGW.

For example, the core device includes the MC, and the edge device includes the ACC. The MC is a frame-shaped device, and a port of the frame-shaped device may be flexibly changed. Therefore, a main control board providing a processing capability can be additionally configured based on an application identification requirement, or a service board dedicated to application identification can be configured, enhancing a processing capability of the MC. The ACC is usually a box-shaped device, and a port of the box-shaped device is fixed. Therefore, a main control board or a service board cannot be additionally configured based on an application identification requirement. As a result, a processing capability of the ACC is weak.

It may be understood that the implementation environment shown in FIG. 1 is merely an example, and is not intended to limit this application. In addition to the implementation environment shown in FIG. 1, another scenario in which the core device and the edge device are included, the core device has an application identification capability, and both an uplink packet and a downlink packet pass through a same edge device can also be used as an implementation environment of this application.

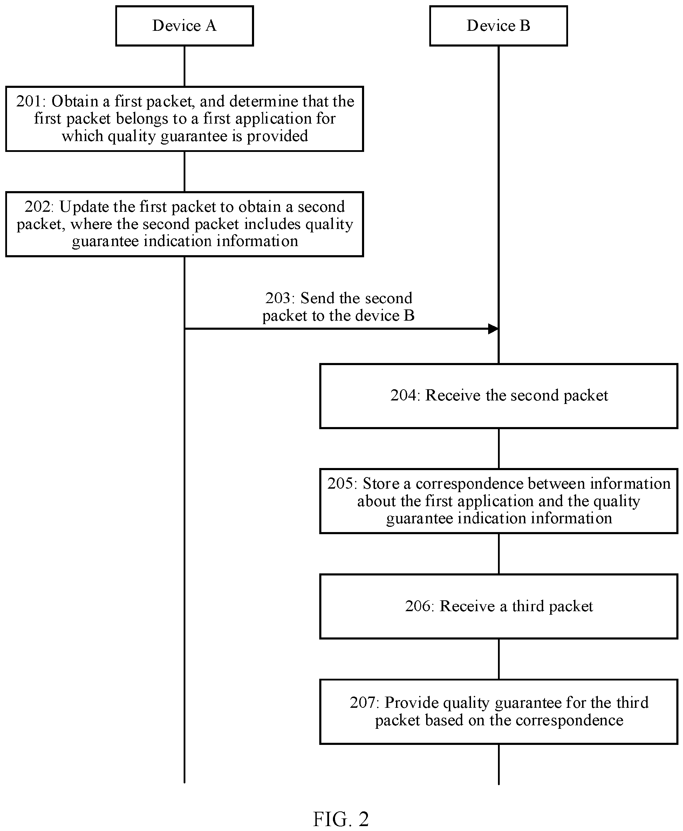

Based on the implementation environment described in the foregoing figure, this application provides a packet transmission method. The method is applied to a device A and a device B. Refer to FIG. 2. The method includes the following steps.

**201: The device A obtains a first packet, and determines that the first packet belongs to a first application for which quality guarantee needs to be provided.**

The device A may correspond to the foregoing core device, for example, the MC in FIG. 1. The first packet is a packet received by the device A or a packet generated by the device A. After the device A obtains the first packet, because the device A has an application identification capability, the device A can perform application identification on the first packet. An application to which the first packet belongs can be determined through application identification. For example, the first packet belongs to the first application that needs to be guaranteed, or belongs to a second application that does not need to be guaranteed. In this application, the application may be software for providing functions, or may be a same user, a same enterprise account, or the like. The software application for providing functions includes but is not limited to a game application, a video application, or the like. In some networks, because IP tuple information of the application may be constantly changed, application identification cannot be performed only by using the configured IP tuple information. A manner of performing application identification by the device A is not limited in this application. For example, the device A may perform application identification through DPI or AI.

In response to identifying that the first packet belongs to the first application for which quality guarantee needs to be provided, the device A determines quality guarantee indication information of the first application, and the device A can select a path for the first packet based on the quality guarantee indication information. For example, a mapping relationship between the first application and the quality guarantee indication information is configured in the device A. After identifying the first application, the device A can obtain, based on the mapping relationship between the first application and the quality guarantee indication information, the quality guarantee indication information corresponding to the first application. For example, the quality guarantee indication information includes an SLA requirement and/or an SLA guarantee (guarantee) identifier. Therefore, the quality guarantee indication information includes the following three cases A1 to A3.

**Case A1:** The quality guarantee indication information includes the SLA requirement.

The SLA requirement indicates a requirement in terms of bandwidth, latency, reliability, and the like. For example, in this implementation, the SLA requirement of the first application is indicated by using an SLA level (level) identifier, and different values of the SLA level identifier indicate different requirements. For example, if a value of the SLA level identifier is 1, it indicates that required latency is less than a latency threshold. In a process of selecting a path based on the SLA requirement, for the first packet belonging to the first application, a forwarding path satisfying the SLA requirement of the first packet is selected. For another packet of the second application that does not need to be guaranteed, routing is normally performed according to a configured routing table. The forwarding path satisfying the SLA requirement includes but is not limited to: a path whose bandwidth is not less than the bandwidth indicated by the SLA requirement, a path whose latency is not greater than the latency indicated by the SLA requirement, and a path whose reliability is not lower than the reliability indicated by the SLA requirement.

**Case A2:** The quality guarantee indication information includes the SLA guarantee identifier.

The SLA guarantee identifier indicates whether a packet needs to be guaranteed. In Case A2, if a mapping relationship between the SLA guarantee identifier and a path selection policy is configured in the device A, the path selection policy corresponding to the SLA guarantee identifier may be determined based on the mapping relationship between the SLA guarantee identifier and the path selection policy, to select a path based on the determined path selection policy. For example, in response to the SLA guarantee identifier indicating that the packet needs to be guaranteed, a corresponding path selection policy includes: selecting an optimal path as a forwarding path. In response to the SLA guarantee identifier indicating that the packet does not need to be guaranteed, the corresponding path selection policy includes: selecting a path other than the optimal path as the forwarding path. The optimal path includes but is not limited to a path with maximum bandwidth, a path with minimum latency, and a path with highest reliability.

For example, in this implementation, different indication cases of the SLA guarantee identifier are indicated by using different values. For example, if the SLA guarantee identifier is a first value, the value indicates that the guarantee needs to be provided. If the SLA guarantee identifier is a second value, the SLA guarantee identifier indicates that the guarantee does not need to be performed. For example, the first value is 1 and the second value is 0, or the first value is 0 and the second value is 1. Values of the first value and the second value are not limited in this implementation.

**Case A3:** The quality guarantee indication information includes the SLA requirement and the SLA guarantee identifier.

In Case A3, the SLA requirement indicates a requirement in terms of bandwidth, latency, reliability, and the like, and the SLA guarantee identifier indicates whether the guarantee needs to be performed based on the SLA requirement. Therefore, when the SLA guarantee identifier indicates that the guarantee needs to be performed based on the SLA requirement, path selection is performed based on the SLA requirement. Alternatively, when the SLA guarantee identifier indicates that the guarantee does not need to be performed based on the SLA requirement, path selection does not need to be performed based on the SLA requirement, and routing is normally performed.

**202: The device A updates the first packet to obtain a second packet, where the second packet includes the quality guarantee indication information.**

After determining the quality guarantee indication information of the first application, the device A updates the first packet based on the quality guarantee indication information to obtain the second packet, so that the second packet includes the quality guarantee indication information. For example, the second packet carries the quality guarantee indication information in the following manner.

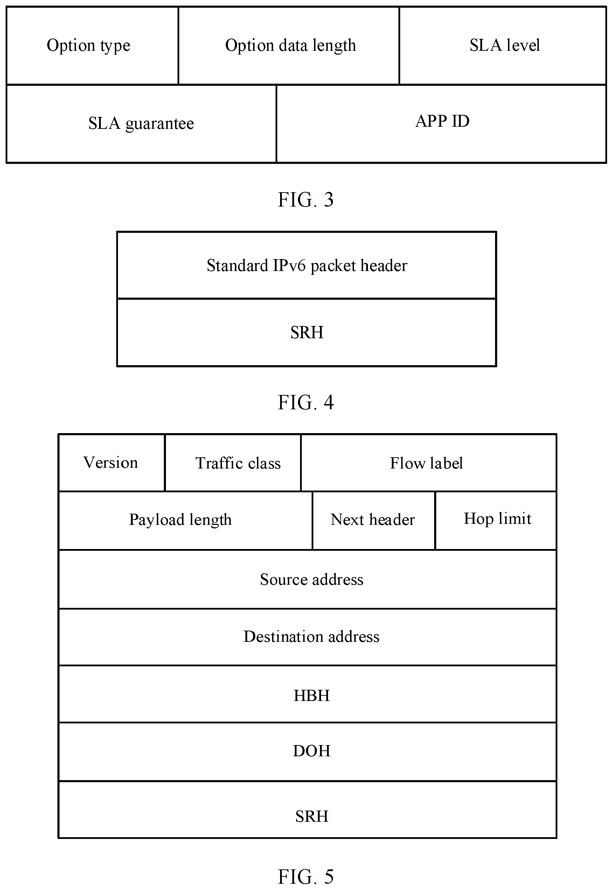

For example, the second packet includes an IPv6 packet, and the quality guarantee indication information is located in a packet header of the IPv6 packet. The IPv6 packet header includes a standard IPv6 header (IPv6 header) and an IPv6 extension header (IPv6 extension header), and the IPv6 extension header includes but is not limited to a hop-by-hop (hop-by-hop, HBH) packet header, a destination option header (destination option header, DOH), and a segment routing header (segment routing header, SRH). For example, in this implementation, a type-length-value (type-length-value, TLV) field is added to the IPv6 packet header, so that the quality guarantee indication information is carried in the TLV field in the IPv6 packet header. For example, the quality guarantee indication information includes the SLA requirement and the SLA guarantee identifier. FIG. 3 shows a case in which the TLV field carries the SLA requirement and the SLA guarantee identifier. In FIG. 3, there are an option type (option type) field, an option data length (option data length) field, an SLA level indicating the SLA requirement, and the SLA guarantee identifier. In addition, FIG. 3 further includes an application (application, APP) identifier (identifier, ID) field. For the APP ID field, refer to the following descriptions.

For example, the quality guarantee indication information is located in an application-aware IPv6 networking (application-aware IPv6 networking, APN6) packet header of the IPv6 packet, and the APN6 packet header is located in an IPv6 extension header. FIG. 4 shows a structure of a packet header including a standard IPv6 packet header and an SRH. In addition, FIG. 5 shows another example structure of a packet header, including a standard IPv6 packet header, an HBH, a DOH, and an SRH. The standard IPv6 packet header includes the following fields: version (version), traffic class (traffic class), flow label (flow label), payload length (payload length), next header (next header), hop limit (hop limit), source address (source address), and destination address (destination address).

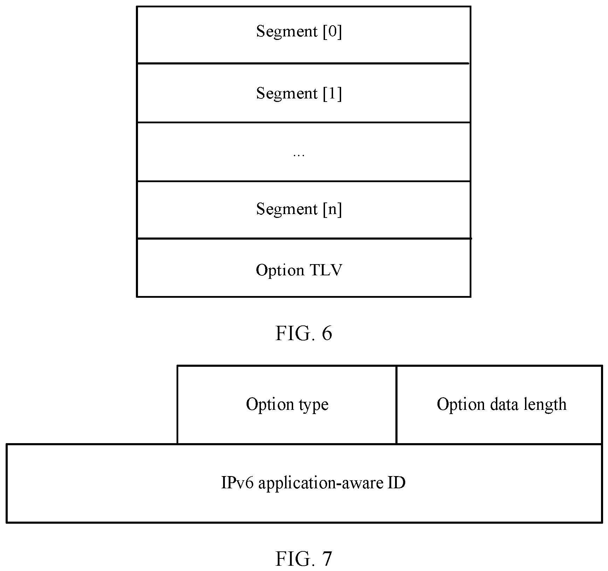

FIG. 6 is a schematic diagram of a structure of an SRH. The SRH includes (n+1) segment (segment) and an option (option) TLV, where n is an integer not less than 0. For example, when the APN6 packet header is located in the SRH, the APN6 packet header is located in the option TLV field of the SRH shown in FIG. 6. When the APN6 packet header is located in the IPv6 extension header, the APN6 packet header is located in an added TLV field in the IPv6 extension header.

For example, the quality guarantee indication information includes the SLA requirement and the SLA guarantee identifier, and the APN6 packet header includes an APN6 basic header and an APN6 parameter extension header. Correspondingly, the SLA requirement is located in the APN6 basic header, and the SLA guarantee identifier is located in the APN6 parameter extension header. Alternatively, the SLA requirement is located in the APN6 parameter extension header, and the SLA guarantee identifier is located in the APN6 basic header.

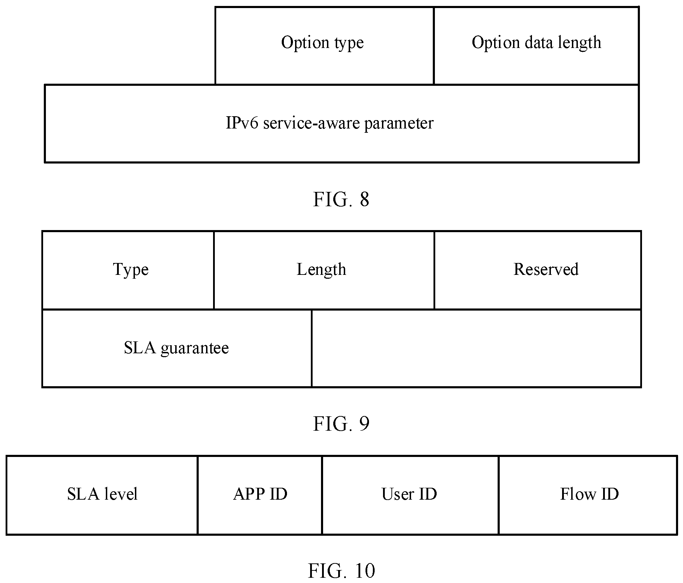

Refer to FIG. 7. The APN6 basic header includes an option type field, an option data length field, and an IPv6 application-aware (application-aware) ID field, and the SLA requirement or the SLA guarantee identifier is located in the IPv6 application-aware ID field. As shown in FIG. 8, the APN6 extension header includes an option type field, an option data length field, and an IPv6 service-aware (service-aware) parameter (parameter) field. The IPv6 service-aware parameter field is a variable (variable) sub-TLV (sub-TLV) field, and the SLA requirement or the SLA guarantee identifier is located in the IPv6 service-aware parameter field. The SLA guarantee identifier is used as an example. In this implementation, a type (type) field is added to the IPv6 service-aware parameter field, and the added type field carries the SLA guarantee identifier. For a schematic diagram of a structure of the type field, refer to FIG. 9. In FIG. 9, the type field includes the following types: type, length, reserved (reserved), and the SLA guarantee identifier.

Alternatively, the APN6 packet header includes an APN6 basic header, and the quality guarantee indication information is located in the APN6 basic header. Alternatively, the APN6 packet header includes an APN6 parameter extension header, and the quality guarantee indication information is located in the APN6 extension header.

For example, that the device A updates the first packet to obtain the second packet further includes: The device A obtains a first identifier of the first application, where the first identifier includes at least one of the following: an APP identifier, a user (user) identifier, and a flow (flow) identifier; and encapsulates the first identifier into the second packet. In an example in which both the SLA requirement and the first identifier are encapsulated into the IPv6 application-aware ID field in the second packet, for a schematic diagram of a structure of the IPv6 application-aware ID field, refer to FIG. 10.

The application identifier indicates an application corresponding to the first packet, the user identifier indicates a user corresponding to the first packet, and the flow identifier indicates a packet flow corresponding to the first packet. The first identifier encapsulated into the second packet is used by a device that subsequently receives the second packet for traffic management. For a traffic management process, refer to the following descriptions in 204.

**203: The device A sends the second packet to the device B.**

The device B may correspond to the edge device, for example, the ACC in FIG. 1. After obtaining the second packet, the device A sends the second packet to the device B, so that in a subsequent packet transmission process of the second packet, application identification can be performed and quality guarantee can be provided based on the quality guarantee indication information included in the second packet.

For example, the device A sends the second packet according to a tunnel policy (SRv6 policy). In a case in which the second packet includes an internet protocol version 4 (Internet Protocol version 4, IPv4) packet, the device A encapsulates an IPv6 packet header based on the second packet, and then sends the second packet according to the tunnel policy. In a case in which the second packet includes an IPv6 packet, the device A may directly send the second packet according to the tunnel policy, or may perform route forwarding on the second packet.

For example, that the device A sends the second packet to the device B includes the following cases B1 and B2.

**Case B1:** The device A is configured with a plurality of tunnel policies, different tunnel policies correspond to different policy identifiers, and the device A is configured with a first mapping relationship between the quality guarantee indication information and the policy identifier. That the device A sends the second packet to the device B includes: The device A determines, based on the first mapping relationship, a target policy identifier corresponding to the quality guarantee indication information of the first application; determines, from a plurality of tunnel policies configured by the device A, a tunnel policy corresponding to the target policy identifier; and transmits the second packet based on the tunnel policy corresponding to the target policy identifier.

Any tunnel policy specifies a transmission path, and the transmission path includes a plurality of specified nodes. The tunnel policy is uniquely identified by a 3-tuple: a head point, a color (color) value, and an end point (end point). For example, in this implementation, the color value is further used as a policy identifier. The head point includes a generation node of the tunnel policy, and a head point of each tunnel policy configured by the device A includes the device A. The end point includes a destination address of the tunnel policy, and an end point of each tunnel policy configured by the device A includes an address of the device B. Therefore, that the device A transmits the second packet according to any tunnel policy means that the device A transmits the second packet to the device B hop by hop based on each node included on a transmission path specified by any tunnel policy.

Because the first mapping relationship between the quality guarantee indication information and the policy identifier is configured for the device A, the device A can determine, based on the first mapping relationship, the target policy identifier that matches the quality guarantee indication information of the first application. Then, the device A determines, from the plurality of tunnel policies configured by the device A, the tunnel policy corresponding to the target policy identifier, and then transmits the second packet to the device A according to the tunnel policy corresponding to the target policy identifier.

Notably, during actual application, the tunnel policy is represented as a segment list (segment list), also referred to as a segment ID list (segment ID list, SID list). A plurality of nodes included on the transmission path specified by any tunnel policy are arranged in the SID list from bottom to top according to a sequence of the nodes on the transmission path. Therefore, in a process of transmitting the second packet to the device B according to the tunnel policy corresponding to the target policy identifier, the tunnel policy corresponding to the target policy identifier, namely, the SID list, is configured in the second packet. In this case, in the transmission process, the device A first transmits the second packet to the last node in the SID list, and then the last node in the SID list transmits the second packet to the penultimate node in the SID list, and so on, until the second packet reaches the first node in the SID list, namely, the device B.

**Case B2:** The device A is configured with a plurality of tunnel policies, different tunnel policies correspond to different policy identifiers, and the device A is further configured with a second mapping relationship between the quality guarantee indication information and a target mark and a third mapping relationship between the target mark and a target policy identifier. The target policy identifier is one of policy identifiers corresponding to the plurality of tunnel policies. That the device A sends the second packet to the device B includes: The device A determines, based on the second mapping relationship, the target mark corresponding to the quality guarantee indication information of the first application, determines, based on the third mapping relationship, the target policy identifier corresponding to the target mark, determines, from the plurality of tunnel policies configured by the device A, a tunnel policy corresponding to the target policy identifier, and transmits the second packet based on the tunnel policy corresponding to the target policy identifier.

The target mark includes but is not limited to a differential service code point (differential service code point, DSCP) and a priority mark configured in the device A. After determining the quality guarantee indication information of the first application, the device A determines, based on the second mapping relationship, the target mark corresponding to the quality guarantee indication information of the first application, and then determines, based on the third mapping identifier, the target policy identifier corresponding to the target mark, so that the second packet can be transmitted based on the tunnel policy corresponding to the target policy identifier. In addition, for a manner in which the device A transmits the second packet according to the tunnel policy corresponding to the target policy identifier, refer to the descriptions in the foregoing case A1. Details are not described herein again.

For example, when the device A transmits another packet of the second application that does not need to be guaranteed, the device A transmits the another packet according to a tunnel policy other than the tunnel policy corresponding to the target policy identifier. In a process of transmitting another packet according to another tunnel policy, whether the device B has advertised a route to the device A affects the manner in which the device A transmits the another packet. The following describes two manners.

When the device B advertises the route, the device A transmits the another packet by coloring the route.

The route advertised by the device B includes a route prefix (prefix) and a next hop (next hop), where the route prefix is an address of a device other than the device B in a network, and the next hop is an address of the device B. The route indicates that, in response to any packet whose destination address is a route prefix, the device B is selected as a next hop of the any packet. For example, in this implementation, a manner in which the device B advertises the route is not limited. For example, the device B advertises routing information by using a border gateway protocol (border gateway protocol, BGP).

Route coloring means that the policy identifier is added to the route advertised by the device B by using the route policy, and the route carries the policy identifier. Then, in response to a case that a policy identifier carried by one route is the same as a policy identifier corresponding to one tunnel policy, route recursion can be performed on the route and the tunnel policy. In a route recursion process, in response to a case that a destination address of any packet is a route prefix included in one route, a tunnel policy that has a same policy identifier as that of the route is configured for the any packet, namely, the SID list. Therefore, in a process of transmitting the any packet from the device A to the device B, the packet passes through a transmission path specified by the tunnel policy that has the same policy identifier as that of the route. After the any packet reaches the device B through the specified transmission path, the device B forwards the any packet to the destination address. In this way, packet transmission is implemented in a route coloring process.

In a case in which the another packet needs to be transmitted according to the another tunnel policy, the device A colors, based on the policy identifier corresponding to the another tunnel policy, the route advertised by the device B. Alternatively, when the device B advertises the route, the device B colors the route. In this case, the device A transmits, according to the another tunnel policy by default, the another packet of the second application that does not need to be guaranteed. It can be learned that the device A transmits the second packet and the another packet separately according to different tunnel policies, that is, the first application that needs to be guaranteed is distinguished from another application that does not need to be guaranteed.

Alternatively, in a case in which the device B does not advertise the route, the device A transmits the another packet through redirection (redirect). In this case, because the device B does not advertise the route, the device A may not color the route, and consequently may not implement route recursion between the route and the tunnel policy. Therefore, the device A modifies, through redirection, a transmission path of another packet to a transmission path specified by another tunnel policy, so that the device A can transmit the another packet according to the another tunnel policy.

Next, an example in which the device A corresponds to an MC, the device B corresponds to an ACC, and the second packet corresponds to a downlink packet is used, to describe a process in which the device A transmits a packet.

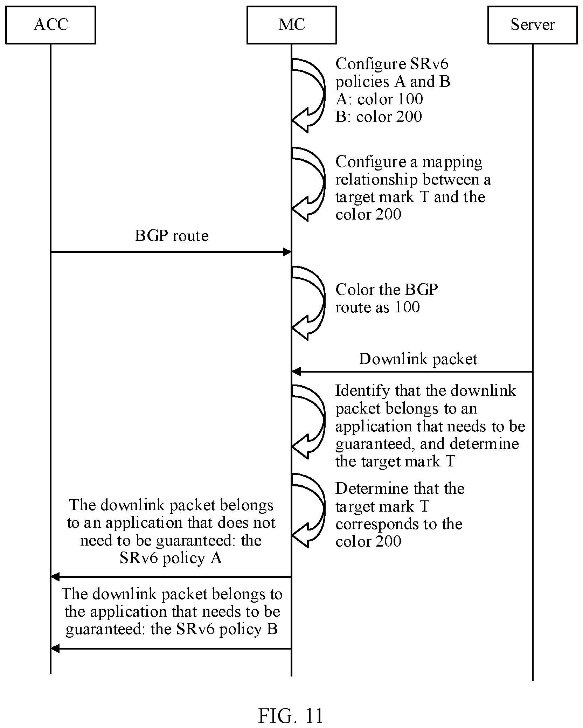

As shown in FIG. 11, an SRv6 policy A whose color is 100 and an SRv6 policy B whose color is 200 are configured in the MC. The SRv6 policy A is a common path whose latency is not less than a threshold, and the SRv6 policy B is a low-latency path whose latency is less than the threshold. The MC configures a mapping relationship between a target mark T and the color 200 by using a color 200 match mark T. In addition, after receiving a BGP route advertised by the ACC, the MC colors the BGP route as 100 in the following manner:
peer ACC-IP route-policy A import
route-policy A permit node 10
apply extcommunity color 0:100

After receiving the downlink packet, the MC performs application identification of the downlink packet. In response to a case that the downlink packet belongs to the first application that needs to be guaranteed, the target mark T is determined, and the color corresponding to the target mark T is determined as 200 based on the mapping relationship. Then, the downlink packet is sent to the ACC according to the SRv6 policy B whose color is 200. Alternatively, in response to a case that the downlink packet belongs to the second application that does not need to be guaranteed, the downlink packet is sent to the ACC according to the SRv6 policy A.

**204: The device B receives the second packet.**

It can be learned from the descriptions in 201 to 203 that the second packet belongs to the first application. Because the device A encapsulates the quality guarantee indication information into the second packet, the second packet further includes the quality guarantee indication information. In addition, the second packet further includes information about the first application. For example, the information about the first application includes transmission information of the second packet, and the transmission information of the second packet includes internet protocol (internet protocol, IP) tuple information of the second packet.

In some implementations, the IP tuple information of the second packet includes a 4-tuple: a source IP address, a destination IP address, a source port, and a destination port. Alternatively, the IP tuple information of the second packet includes a 5-tuple: a source IP address, a destination IP address, a protocol number, a source port, and a destination port. Alternatively, the IP tuple information of the second packet includes a seven-tuple: a source IP address, a destination IP address, a protocol number, a source port, a destination port, a type of service (type of service, ToS), and an interface index.

For example, in addition to the IP tuple information, the information about the first application may further include a first identifier. The first identifier includes at least one of the following: an application identifier, a user identifier, and a flow identifier, the application identifier indicates an application corresponding to the second packet, the user identifier indicates a user corresponding to the second packet, and the flow identifier indicates a packet flow corresponding to the second packet.

The device B can perform traffic management based on the first identifier. For example, traffic management performed by the device B includes but is not limited to: performing traffic analysis based on the first identifier to obtain an analysis result, and selecting an appropriate traffic management policy based on the analysis result, for example, adjusting a traffic processing priority, uploading traffic to a network manager for further analysis, and limiting and discarding the traffic. For example, in a process of performing traffic analysis based on the first identifier, the device B collects, based on the application identifier included in the first identifier, statistics on total traffic corresponding to the first application. Alternatively, the device B collects, based on the user identifier included in the first identifier, statistics on total traffic consumed by any user. Alternatively, the device B collects, based on the flow identifier included in the first identifier, total traffic corresponding to any packet flow. In this implementation, the traffic analysis process and the traffic management policy are not limited.

Notably, that the second packet received by the device B is sent by the device A is merely an example, and is not used to limit a sending device of the second packet. In some implementations, the second packet including the quality guarantee indication information may also be sent by another device other than the device A.

**205: The device B stores a correspondence between the information about the first application and the quality guarantee indication information.**

In a packet transmission process, the device B usually receives a plurality of packets. In response to a case that the received packet does not carry the quality guarantee indication information, the device B normally sends the packet. In response to a case that the received packet includes the second packet carrying the quality guarantee indication information, the device B stores the correspondence between the information about the first application and the quality guarantee indication information. In some implementations, the device B stores the correspondence in the following two manners.

In a first storage manner, the correspondence includes the information about the first application and the quality guarantee indication information.

For example, the quality guarantee indication information includes the SLA requirement. The device B correspondingly stores the SLA requirement and the information about the first application according to the following Table 1. In Table 1, a protocol number 6 indicates that a used transmission protocol is a transmission control protocol (transmission control protocol, TCP), and an SLA level identifier is an identifier indicating the SLA requirement.

**Table 1**

| Source IP address | Source port | Destination IP address | Destination port | Protocol number | SLA level |
|---|---|---|---|---|---|
| 1.1.1.1 | 6000 | 2.2.2.2 | 80 | 6 | 1 |

In a second storage manner, the correspondence includes only the information about the first application, and does not include the quality guarantee indication information, but the corresponding quality guarantee indication information can be determined based on the information about the first application.

For example, the device B stores the information about the first application according to the following Table 2, and Table 2 includes the corresponding quality guarantee indication information.

**Table 2**

| Source IP address | Source port | Destination IP address | Destination port | Protocol number |
|---|---|---|---|---|
| 1.1.1.1 | 6000 | 2.2.2.2 | 80 | 6 |

In some implementations, in response to a case that the quality guarantee indication information includes the SLA requirement and the SLA guarantee identifier, the device B does not directly perform a storage operation, but stores the correspondence between the information about the first application and the quality guarantee indication information when the SLA guarantee identifier indicates that quality guarantee needs to be provided.

**206: The device B receives a third packet.**

The third packet is a to-be-transmitted packet. After obtaining the third packet, the device B identifies, based on the information about the first application, an application to which the third packet belongs.

For example, it canbe learned from the descriptions in 202 that the information about the first application includes the transmission information of the second packet. Correspondingly, that the device B identifies the third packet based on the information about the first application includes: in response to a case that transmission information of the third packet matches the transmission information of the second packet, and determining that the third packet belongs to the first application. If the transmission information of the third packet matches the transmission information of the second packet, it indicates that the third packet and the second packet belong to a same application. Because the second packet belongs to the first application, the third packet also belongs to the first application.

For example, the IP tuple information included in the transmission information is a 5-tuple, that the transmission information of the third packet matches the transmission information of the second packet includes the following conditions: a source IP address of the third packet corresponds to the destination IP address of the second packet, a source port of the third packet corresponds to the destination port of the second packet, a destination IP address of the third packet corresponds to the source IP address of the second packet, a destination port of the third packet corresponds to the source port of the second packet, and a protocol number of the third packet is the same as a protocol number of the third packet. According to these conditions, it can be determined that the second packet and the third packet are packets that are transmitted by two same devices in opposite directions through a same port. Therefore, it can be indicated that the second packet and the third packet belong to a same application.

For example, Table 3 shows a case in which a 5-tuple of the third packet matches a 5-tuple of the second packet.

**Table 3**

| | Source IP address | Source port | Destination IP address | Destination port | Protocol number |
|---|---|---|---|---|---|
| Third packet | 2.2.2.2 | 80 | 1.1.1.1 | 6000 | 6 |
| Second packet | 1.1.1.1 | 6000 | 2.2.2.2 | 80 | 6 |

It can be learned that the device B can implement application identification on the third packet based on the information about the first application. For example, when the information about the first application includes the transmission information of the second packet, the device B does not need to have an application device capability, and the device B may provide corresponding network quality guarantee for the application only by comparing the transmission information. In comparison with manners such as DPI and AI provided in a related technology, the identification manner provided in this application does not need to depend on a strong processing capability. In other words, even if the processing capability of the device B is weak, application identification can still be implemented in the identification manner provided in this application.

**207: The device B provides quality guarantee for the third packet based on the correspondence.**

The correspondence includes the information about the first application and the quality guarantee indication information. Therefore, in response to identifying that the third packet belongs to the first application, the corresponding quality guarantee indication information can be determined based on the information about the first application and the correspondence, to provide quality guarantee for the third packet based on the quality guarantee indication information.

For example, that the device B provides quality guarantee for the third packet based on the correspondence includes: The device B determines, based on the quality guarantee indication information, a forwarding path corresponding to the first application, and sends the third packet on the forwarding path. In some implementations, in response to a case that the second packet received by the device B is sent by the device A, that the device B provides quality guarantee for the third packet based on the correspondence includes: The device B sends the third packet to the device A.

That the device B determines, based on the quality guarantee indication information, the forwarding path corresponding to the first application includes: The device B determines a tunnel policy matching the quality guarantee indication information as the forwarding path. A manner of determining the forwarding path includes the following two cases C1 and C2. For Case C1, refer to Case B 1 in 203; and for Case C2, refer to Case B2 in 203. Details are not described herein again.

Case C1: The device B is configured with a plurality of tunnel policies, different tunnel policies correspond to different policy identifiers, and the device B is configured with a first mapping relationship between the quality guarantee indication information and the policy identifier. That the device B determines the tunnel policy matching the quality guarantee indication information as the forwarding path includes: The device B determines, based on the first mapping relationship, a target policy identifier corresponding to the quality guarantee indication information, and determines, from a plurality of tunnel policies configured by the device B, a tunnel policy corresponding to the target policy identifier, and determines the tunnel policy corresponding to the target policy identifier as the forwarding path.

Case C2: The device B is configured with a plurality of tunnel policies, different tunnel policies correspond to different policy identifiers, and the device B is further configured with a second mapping relationship between the quality guarantee indication information and a target mark and a third mapping relationship between the target mark and a target policy identifier. The target policy identifier is one of policy identifiers corresponding to the plurality of tunnel policies. That the device B determines the tunnel policy matching the quality guarantee indication information as the forwarding path includes: The device B determines, based on the second mapping relationship, the target mark corresponding to the quality guarantee indication information, determines, based on the third mapping relationship, the target policy identifier corresponding to the target mark, determines, from the plurality of tunnel policies configured by the device B, the tunnel policy corresponding to the target policy identifier, and determines the tunnel policy corresponding to the target policy identifier as the forwarding path.

For example, the method further includes: The device B encapsulates the quality guarantee indication information into the third packet, where the device B may encapsulate the quality guarantee indication information into the third packet before providing quality guarantee for the third packet based on the correspondence, or may encapsulate the quality guarantee indication information into the third packet after providing quality guarantee. The quality guarantee indication information encapsulated into the third packet is used by each hop device after the device B to determine quality of service (quality of service, QoS), to perform control and scheduling on the third packet based on the QoS. Alternatively, the quality guarantee indication information encapsulated into the third packet is further used by each hop device after the device B to reselect a route for the third packet.

For example, in addition to encapsulating the quality guarantee indication information, the device B further encapsulates the application identifier into the third packet, and each hop device after the device B determines an application of the third packet based on the quality guarantee indication information and the application identifier, to perform statistics management based on the application of the third packet. For example, the statistics management performed by each hop device includes but is not limited to: application-level control based on the application of the third packet and a service function chain (service function chain, SFC). The statistics management performed by each hop device is not limited in this application. In some implementations, the device B can further encapsulate the user identifier and/or the flow identifier into the third packet based on the application identifier, so that each hop device performs further statistics management.

Notably, the SFC includes a plurality of serving nodes, and the serving nodes are in a one-to-one correspondence with services. Therefore, the plurality of serving nodes can provide a plurality of ordered services. Each hop device sends the third packet to at least one serving node in the SFC based on the application of the third packet, and each serving node that receives the third packet provides a corresponding service, to obtain a service result used to perform application-level control. In this implementation, the service provided by the serving node included in the SFC is not limited. For example, the service provided by the serving node includes but is not limited to: anti-distributed denial of service (anti-distributed denial of service, anti-DDoS), log audit, URL control, application control, a firewall (firewall, FW), and the like.

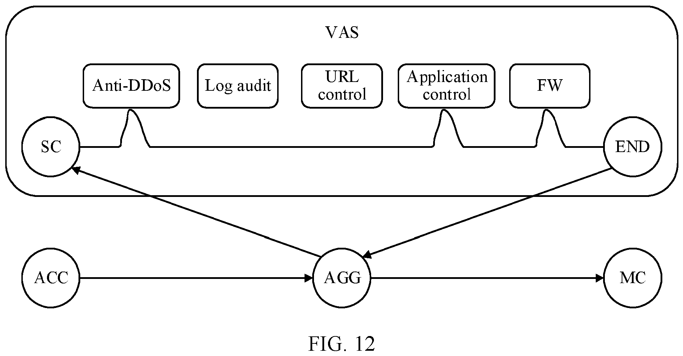

An example in which each hop device includes an AGG is used. FIG. 12 shows a process in which the AGG performs application-level control by using a value-added service system (value-added service system, VAS) located on a cloud. The VAS includes a service classifier (service classifier, SC) and a tail node (tail end). The AGG sends the third packet and the application of the third packet to the SC, and the SC selects, based on the application of the third packet, the at least one serving node from the serving nodes included in the SFC. For example, in FIG. 12, three serving nodes, namely, the anti-DDoS, the application control, and the FW, are selected, and the third packet sequentially arrives at the selected serving nodes. After the last serving node provides the service, the service result is sent to the tail node, and the tail node sends the service result to the AGG, so that the AGG performs application-level control based on the received service result.

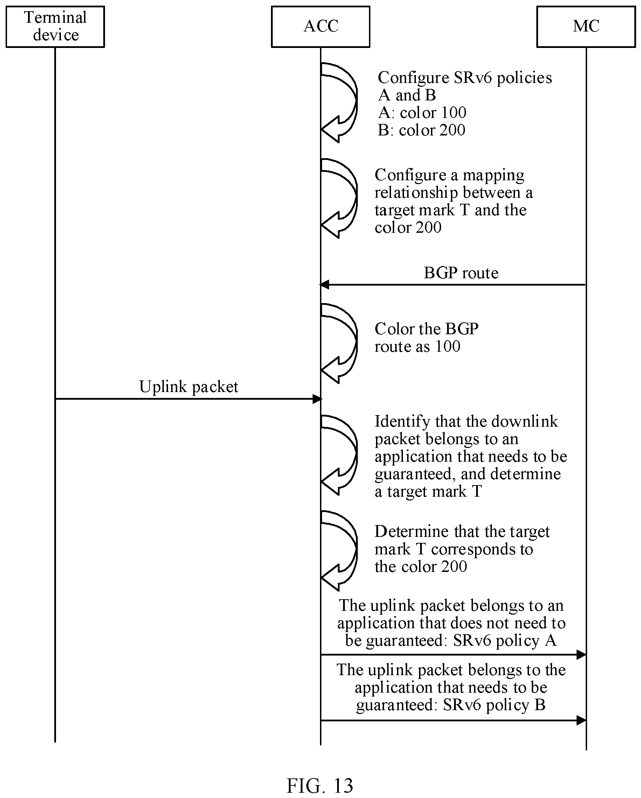

For example, a device A corresponds to an MC, and a device B corresponds to an ACC. FIG. 13 shows a process in which the device B transmits an uplink packet. For the process of transmitting the uplink packet, refer to the descriptions corresponding to FIG. 11. Details are not described herein again.

In conclusion, because the device A has an application identification capability, after identifying that a first packet belongs to a first application, the device A can send, to the device B, a second packet carrying quality guarantee indication information. Therefore, based on the quality guarantee indication information carried in the second packet, even if a processing capability is weak, the device B can obtain corresponding application information from the second packet, so that network quality guarantee can be provided based on the obtained application information and guarantee information. This implements differentiated transmission of packets of different applications. This not only reduces costs of an operator, but also improves user experience.

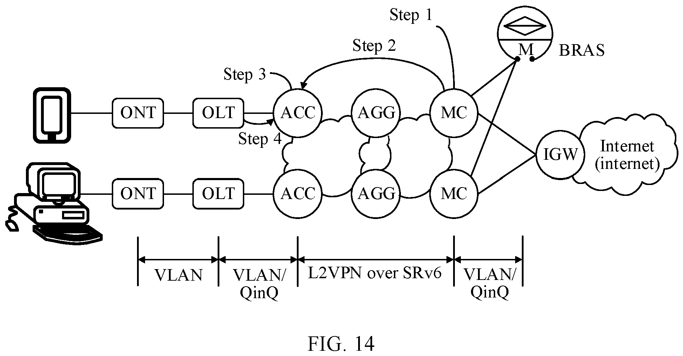

Next, refer to FIG. 14. A packet transmission method provided in this application is described through interaction between an ACC and an MC.

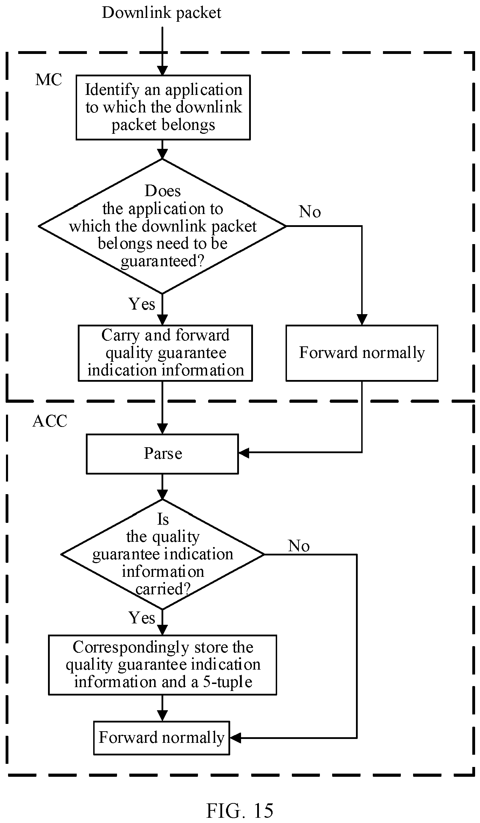

Step 1: The MC receives a downlink packet, and determines that the downlink packet belongs to a first application for which quality guarantee needs to be provided. Refer to FIG. 15. In response to a case that an application to which the downlink packet belongs is the first application that needs to be guaranteed, quality guarantee indication information is carried in the downlink packet.

Step 2: In response to a case that the application to which the downlink packet belongs needs to be guaranteed, the MC selects, based on the quality guarantee indication information, an appropriate forwarding path to forward the downlink packet that carries the quality guarantee indication information. Alternatively, refer to FIG. 15. In response to a case that the application to which the downlink packet belongs does not need to be guaranteed, the MC normally forwards the downlink packet.

Step 3: Refer to FIG. 15. After receiving the downlink packet, the ACC determines whether the downlink packet carries the quality guarantee indication information. In response to a case that the downlink packet does not carry the quality guarantee indication information, the downlink packet is normally forwarded. In response to a case that the downlink packet carries the quality guarantee indication information, a packet header of the downlink packet is parsed to obtain the quality guarantee indication information, and a correspondence between IP tuple information and the quality guarantee indication information of the downlink packet is stored. Then, the downlink packet is normally forwarded.

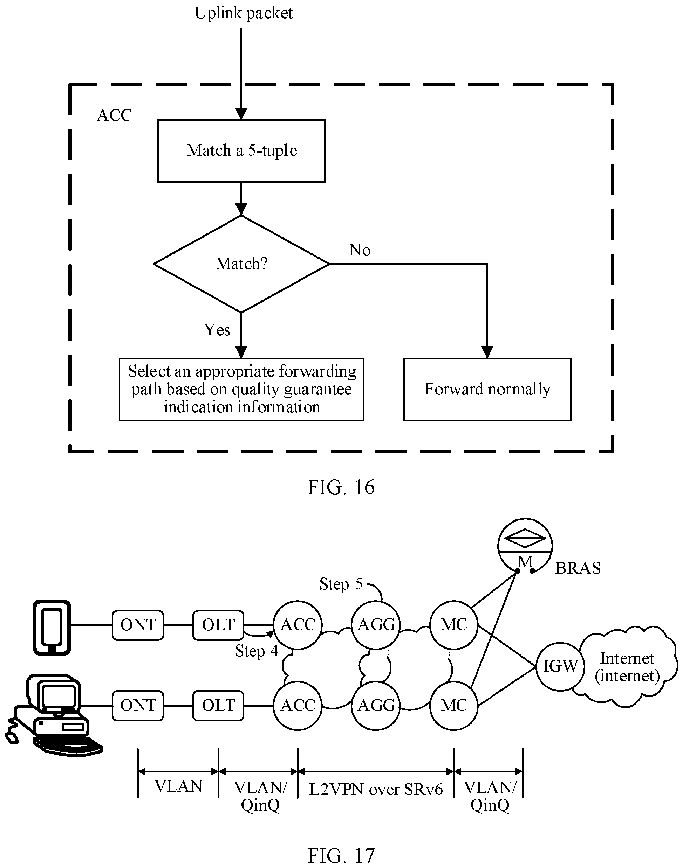

Step 4: Refer to FIG. 16. After the ACC stores the correspondence, in response to a case that the ACC receives an uplink packet, whether IP tuple information of the uplink packet matches the IP tuple information of the downlink packet may be determined. In response to matching, the ACC selects, based on the quality guarantee indication information, the appropriate forwarding path to send the uplink packet, that is, provides quality guarantee for the uplink packet based on the correspondence. Alternatively, in response to unmatching, the ACC normally forwards the uplink packet.

Refer to FIG. 17. In step 4, for the uplink packet that matches a 5-tuple of the downlink packet, the ACC further includes the quality guarantee indication information, an application identifier, a user identifier, and a flow identifier in the uplink packet. In this way, in addition to forwarding the uplink packet, each subsequent device, for example, an AGG device, can further sense an application of the uplink packet based on the quality guarantee indication information, the application identifier, the user identifier, and the flow identifier that are carried in the uplink packet, for traffic management based on the sensed application. Refer to step 5 in FIG. 17.

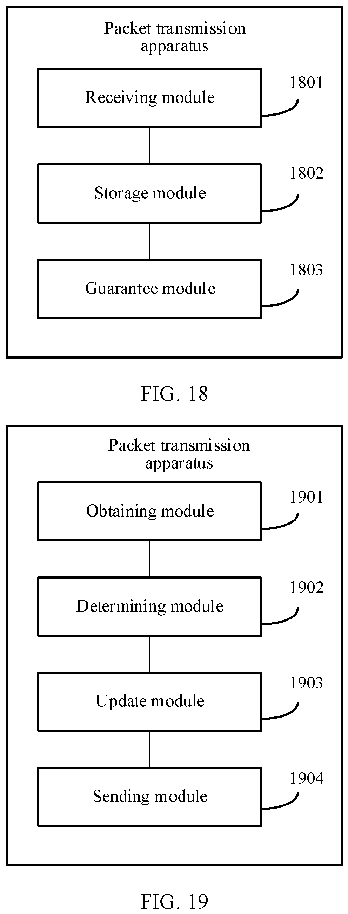

The foregoing describes the packet transmission method in this application. Corresponding to the foregoing method, this application further provides a packet transmission apparatus. The apparatus is configured to perform, through modules shown in FIG. 18, the packet transmission method performed by the device B in FIG. 2. As shown in FIG. 18, this application provides a packet transmission apparatus. The packet transmission apparatus includes the following modules.

A receiving module 1801 is configured to receive a first packet by the device B, where the first packet includes quality guarantee indication information and information about a first application, and the first packet belongs to the first application. For steps performed by the receiving module 1801, refer to the descriptions in 204.

A storage module 1802 is configured to store a correspondence between the information about the first application and the quality guarantee indication information based on the first packet. For steps performed by the storage module 1802, refer to the descriptions in 205.

The receiving module 1801 is further configured to receive a second packet by the device B, where the second packet includes the information about the first application. For steps performed by the receiving module 1802, further refer to the descriptions in 206.

A guarantee module 1803 is configured to provide quality guarantee for the second packet based on the correspondence. For steps performed by the guarantee module 1803, refer to the descriptions in 207.

In a possible implementation, the quality guarantee indication information includes an SLA requirement and/or an SLA guarantee identifier.

In a possible implementation, the first packet includes an IPv6 packet, and the quality guarantee indication information is located in a packet header of the IPv6 packet.

In a possible implementation, the quality guarantee indication information is located in an APN6 packet header of the IPv6 packet, and the APN6 packet header is located in an IPv6 extension header.

In a possible implementation, the APN6 packet header includes an APN6 basic header, and the quality guarantee indication information is located in the APN6 basic header; or
the APN6 packet header includes an APN6 parameter extension header, and the quality guarantee indication information is located in the APN6 extension header.

In a possible implementation, the quality guarantee indication information includes the SLA requirement and the SLA guarantee identifier, the APN6 packet header includes an APN6 basic header and an APN6 parameter extension header, the SLA requirement is located in the APN6 basic header, and the SLA guarantee identifier is located in the APN6 parameter extension header; or
the SLA requirement is located in the APN6 parameter extension header, and the SLA guarantee identifier is located in the APN6 basic header.

In a possible implementation, the information about the first application includes transmission information of the first packet, and the transmission information of the first packet includes IP tuple information of the first packet.

In a possible implementation, the guarantee module 1803 is configured to: determine, by the device B based on the quality guarantee indication information, a forwarding path corresponding to the first application, and send the second packet on the forwarding path.

In a possible implementation, the apparatus further includes an encapsulation module, configured to encapsulate the quality guarantee indication information into the second packet.

In a possible implementation, the information about the first application includes a first identifier, the first identifier includes at least one of the following: an application identifier, a user identifier, and a flow identifier, the application identifier identifies the first application, the user identifier identifies a user corresponding to the first packet, and the flow identifier identifies a packet flow corresponding to the first packet.

In a possible implementation, the first packet received by the device B is sent by a device A, and the guarantee module 1803 is configured to send the second packet to the device A by the device B. The device A corresponds to the device A in FIG. 2.

As shown in FIG. 19, this application further provides a packet transmission apparatus. The apparatus is configured to perform, through modules shown in FIG. 19, the packet transmission method performed by the device A in FIG. 2. The apparatus includes the following several modules.

An obtaining module 1901 is configured to obtain a first packet by the device A.

A determining module 1902 is configured to determine that the first packet belongs to the first application for which quality guarantee needs to be provided by the device A.

For steps performed by the obtaining module 1901 and the determining module 1902, refer to the descriptions in 201.

An update module 1903 is configured to update, by the device A, the first packet to obtain a second packet, where the second packet includes quality guarantee indication information. For steps performed by the update module 1903, refer to the descriptions in 202.

A sending module 1904 is configured to send the second packet to a device B by the device A, where the quality guarantee indication information indicates the device B to obtain information about the first application from the first packet, and provide quality guarantee for the packet belonging to the first application. The device B corresponds to the device B in FIG. 2. For steps performed by the sending module 1904, refer to the descriptions in 203.

In a possible implementation, the quality guarantee indication information includes a service level agreement SLA requirement and/or an SLA guarantee identifier.

In a possible implementation, the update module 1903 is further configured to: obtain a first identifier of the first application by the device A, where the first identifier includes at least one of the following: an application identifier, a user identifier, and a flow identifier; and encapsulate the first identifier into the second packet, where the application identifier identifies an application corresponding to the first packet, the user identifier identifies a user corresponding to the first packet, the flow identifier identifies a packet flow corresponding to the first packet, and the information about the first application includes the first identifier.

It can be understood that, when the apparatuses provided in FIG. 18 and FIG. 19 implement functions of the apparatuses, division into the foregoing functional modules is merely used as an example for description. During actual application, the foregoing functions may be allocated to different functional modules for implementation based on a requirement. In other words, an internal structure of a device is divided into different functional modules, to implement all or some of the functions described above. In addition, the apparatuses provided in FIG. 18 and FIG. 19 belong to a same concept as the method shown in FIG. 2. For a specific implementation process of the apparatuses, refer to 201 to 207. Details are not described herein again.

This application provides a communication device. The device includes a communication interface and a processor. Optionally, the communication device further includes a memory. The communication interface, the memory, and the processor communicate with each other through an internal connection channel. The memory is configured to store instructions. The processor is configured to execute the instructions stored in the memory, to control the communication interface to receive a signal, and control the communication interface to send a signal. In addition, when the processor executes the instructions stored in the memory, the processor is enabled to perform the packet transmission method provided in any one of the examples of this application.

This application provides a communication device. The device includes a communication interface and a processor. Optionally, the communication device further includes a memory. The communication interface, the memory, and the processor communicate with each other through an internal connection channel. The memory is configured to store instructions. The processor is configured to execute the instructions stored in the memory, to control the communication interface to receive a signal, and control the communication interface to send a signal. In addition, when the processor executes the instructions stored in the memory, the processor is enabled to perform the packet transmission method provided in any one of the examples of this application.

In correspondence to the methods and the virtual apparatuses that are provided in this application, this application further provides a communication device. The following describes a hardware structure of the communication device.

A communication device 2000 or a communication device 2100 described below corresponds to the communication device in the foregoing methods. Hardware, modules, and the foregoing other operations and/or functions in the communication device 2000 or the communication device 2100 are separately used to implement steps and methods implemented by the communication device 2000 or the communication device 2100 in the methods. For details about how the communication device 2000 or the communication device 2100 performs packet transmission, refer to the foregoing methods. For brevity, details are not described herein again. The steps 201 to 203 of the foregoing method are completed by using an integrated logic circuit of hardware in a processor of the communication device 2000 or the communication device 2100 or instructions in a form of software. The steps of the methods disclosed with reference to this application may be directly implemented by a hardware processor, or may be implemented by a combination of hardware and a software module in a processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

The communication device 2000 or the communication device 2100 corresponds to the packet transmission apparatus shown in FIG. 18 or FIG. 19 in the foregoing virtual apparatuses. Each functional module in the packet transmission apparatus is implemented by using software of the communication device 2000 or the communication device 2100. In other words, the functional module included in the packet transmission apparatus is generated after the processor of the communication device 2000 or the communication device 2100 reads program code stored in the memory.

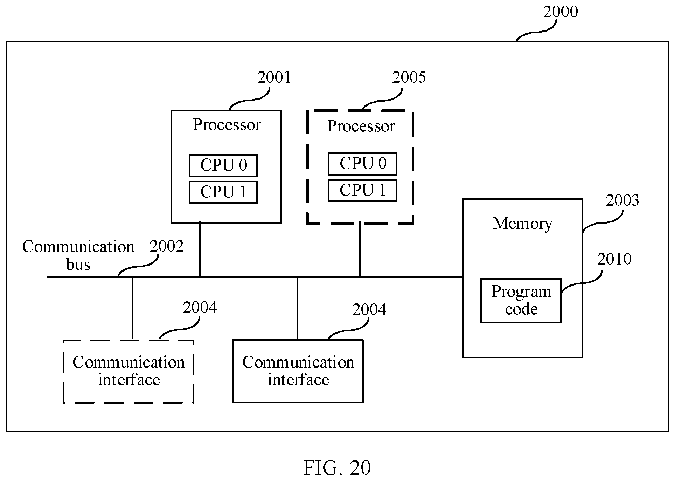

FIG. 20 is a schematic diagram of a structure of an example of a communication device 2000 according to this application. The communication device 2000 shown in FIG. 20 is configured to perform operations in the packet transmission method shown in FIG. 2. The communication device 2000 is, for example, a switch, a router, or a controller.

As shown in FIG. 20, the communication device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, one or more integrated circuits or application-specific integrated circuits (application-specific integrated circuits, ASICs) configured to implement the solutions of this application, a programmable logic device (programmable logic device, PLD), another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks, modules, and circuits described with reference to content disclosed in this application. Alternatively, the processor may be a combination of processors implementing a computing function, for example, including a combination of one or more microprocessors, or a combination of a DSP and a microprocessor.

Optionally, the communication device 2000 further includes a bus. The bus is configured to transmit information between components of the communication device 2000. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line 2002 is for representing the bus in FIG. 20, but this does not mean that there is only one bus or only one type of bus.

The memory 2003 is, for example, a read-only memory (read-only memory, ROM) or another type of static storage device that may store static information and instructions, or a random access memory (random access memory, RAM) or another type of dynamic storage device that may store information and instructions; or may be an electrically erasable programmable read-only memory (electrically erasable programmable read-only Memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium that may be used to carry or store expected program code in a form of instructions or a data structure and that may be accessed by a computer. However, this is not limited thereto. For example, the memory 2003 exists independently, and is connected to the processor 2001 through the bus. Alternatively, the memory 2003 may be integrated with the processor 2001.

The communication interface 2004 is configured to communicate with another device or a communication network through any apparatus of a transceiver type, where the communication network may be the Ethernet, a radio access network (radio access network, RAN), or a wireless local area network (wireless local area network, WLAN). The communication interface 2004 may include a wired communication interface, and may further include a wireless communication interface. Specifically, the communication interface 2004 may be an Ethernet (Ethernet) interface, such as a fast Ethernet (Fast Ethernet, FE) interface, a gigabit Ethernet (Gigabit Ethernet, GE) interface, an asynchronous transfer mode (Asynchronous Transfer Mode, ATM) interface, a WLAN interface, a cellular network communication interface, or a combination thereof. The Ethernet interface may be an optical interface, an electrical interface, or a combination thereof. In some implementations of this application, the communication interface 2004 may be used by the communication device 2000 to communicate with another device.

During specific implementation, in some implementations, the processor 2001 may include one or more CPUs, for example, a CPU 0 and a CPU 1 shown in FIG. 20. Each of the processors may be a single-core processor, or may be a multi-core processor. The processor herein may be one or more devices, circuits, and/or processing cores configured to process data (for example, computer program instructions).

During specific implementation, in some implementations, the communication device 2000 may include a plurality of processors, for example, the processor 2001 and a processor 2005 that are shown in FIG. 20. Each of the processors may be a single-core processor, or may be a multi-core processor. The processor herein may be one or more devices, circuits, and/or processing cores configured to process data (for example, computer program instructions).

In some implementations, the memory 2003 is configured to store program code 2010 for performing the solutions of this application, and the processor 2001 may execute the program code 2010 stored in the memory 2003. In other words, the communication device 2000 may implement, through the processor 2001 and the program code 2010 in the memory 2003, the packet transmission method provided in the method embodiment. The program code 2010 may include one or more software modules. Optionally, the processor 2001 may also store program code or instructions for performing the solutions of this application.

In a specific implementation process, the communication device 2000 in this application may correspond to the communication device in the foregoing methods. The processor 2001 in the communication device 2000 reads the instructions in the memory 2003, so that the communication device 2000 shown in FIG. 20 can perform all or a part of operations performed by the communication device in the methods.

The communication device 2000 may further correspond to the apparatus shown in FIG. 18. Each functional module in the apparatus shown in FIG. 18 is implemented by using software of the communication device 2000. In other words, the functional module included in the apparatus shown in FIG. 18 is generated after the processor 2001 of the communication device 2000 reads the program code 2010 stored in the memory 2003.

The communication device 2000 may further correspond to the apparatus shown in FIG. 19. Each functional module in the apparatus shown in FIG. 19 is implemented by using software of the communication device 2000. In other words, the functional module included in the apparatus shown in FIG. 19 is generated after the processor 2001 of the communication device 2000 reads the program code 2010 stored in the memory 2003.

The steps in the packet transmission method shown in FIG. 2 are completed by using an integrated logic circuit of hardware in the processor of the communication device 2000 or instructions in a form of software. The steps of the methods disclosed with reference to this application may be directly implemented by a hardware processor, or may be implemented by a combination of hardware and a software module in a processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

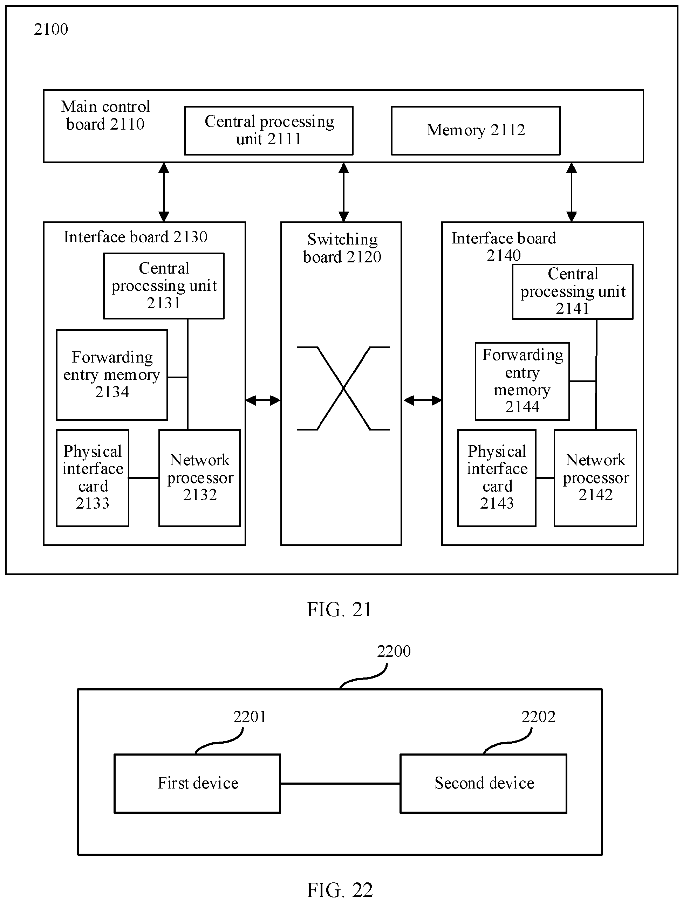

FIG. 21 is a schematic diagram of a structure of an example communication device 2100 according to this application. The communication device 2100 includes a main control board 2100 and an interface board 2130. The communication device 2100 shown in FIG. 21 is configured to perform operations in the packet transmission method shown in FIG. 2. The communication device 2100 is, for example, a switch, a router, or a controller. The communication device 2100 may be an example of the communication device 2000.

The main control board 2100 is also referred to as a main processing unit (main processing unit, MPU) or a route processor card (route processor card). The main control board 2100 controls and manages components in the communication device 2100, including functions such as route calculation, device management, device maintenance, and protocol processing. The main control board 2100 includes: a central processing unit 2101 and a memory 2102.

The interface board 2130 is also referred to as a line processing unit (line processing unit, LPU), a line card (line card), or a service board. The interface board 2130 is configured to provide various service interfaces, and forward a data packet. The service interface includes but is not limited to an Ethernet interface, a POS (Packet over SONET/SDH) interface, and the like. The Ethernet interface is, for example, a flexible Ethernet service interface (Flexible Ethernet Client, FlexE Client). The interface board 2130 includes: a central processing unit 2131, a network processor 2132, a forwarding entry memory 2134, and a physical interface card (physical interface card, PIC) 2133.

The central processing unit 2131 on the interface board 2130 is configured to control and manage the interface board 2130 and communicate with the central processing unit 2101 on the main control board 2100.

The network processor 2132 is configured to implement packet forwarding processing. The network processor 2132 may be in a form of a forwarding chip. Specifically, the network processor 2132 is configured to forward a received packet based on a forwarding table stored in the forwarding entry memory 2134. If a destination address of the packet is an address of the communication device 2100, the network processor 2132 sends the packet to a CPU (for example, the central processing unit 2101) for processing. If a destination address of the packet is not an address of the communication device 2100, the network processor 2132 finds, based on the destination address, a next hop and an output interface that correspond to the destination address in the forwarding table, and forwards the packet to the output interface corresponding to the destination address. Processing on an uplink packet includes processing on a packet input interface and forwarding table lookup. Processing on a downlink packet includes forwarding table lookup and the like.

The physical interface card 2133 is configured to implement a physical layer interconnection function. Original traffic enters the interface board 2130 from the physical interface card 2133, and a processed packet is sent out from the physical interface card 2133. The physical interface card 2133, also referred to as a subcard, may be installed on the interface board 2130, and is responsible for converting an optical/electrical signal into a packet, performing validity check on the packet, and then forwarding the packet to the network processor 2132 for processing. In some embodiments, the central processing unit may also perform a function of the network processor 2132, for example, implement software forwarding based on a general-purpose CPU. Therefore, the network processor 2132 is not necessary in the physical interface card 2133.

Optionally, the communication device 2100 includes a plurality of interface boards. For example, the communication device 2100 further includes an interface board 2140, and the interface board 2140 includes a central processing unit 2141, a network processor 2142, a forwarding entry memory 2144, and a physical interface card 2143.

Optionally, the communication device 2100 further includes a switching board 2100. The switching board 2100 may also be referred to as a switch fabric unit (switch fabric unit, SFU). When the communication device has a plurality of interface boards 2130, the switching board 2100 is configured to complete data exchange between the interface boards. For example, the interface board 2130 and the interface board 2140 may communicate with each other through the switching board 2100.

The main control board 2100 is coupled to the interface board 2130. For example, the main control board 2100, the interface board 2130, the interface board 2140, and the switching board 2100 are connected to a system backboard through a system bus for interworking. In a possible implementation, an inter-process communication (inter-process communication, IPC) channel is established between the main control board 2100 and the interface board 2130, and the main control board 2100 and the interface board 2130 communicate with each other through the IPC channel.

Logically, the communication device 2100 includes a control plane and a forwarding plane. The control plane includes the main control board 2100 and the central processing unit 2131. The forwarding plane includes components used for forwarding, for example, the forwarding entry memory 2134, the physical interface card 2133, and the network processor 2132. The control plane performs functions such as routing, generating a forwarding table, processing signaling and a protocol packet, and configuring and maintaining a device status. The control plane delivers the generated forwarding table to the forwarding plane. On the forwarding plane, the network processor 2132 searches the forwarding table delivered by the control plane, and then forwards, based on the table, a packet received by the physical interface card 2133. The forwarding table delivered by the control plane may be stored in the forwarding entry memory 2134. In some implementations, the control plane and the forwarding plane may be completely separated, and are not on a same device.

If the communication device 2100 is configured as a communication device configured to perform the packet transmission method performed by the device A in FIG. 2, after obtaining a first packet and updating a second packet, the communication device 2100 sends the second packet through the physical interface card 2133. For example, the first packet refers to a packet received through the physical interface card 2133.

If the communication device 2100 is configured as a communication device configured to perform the packet transmission method performed by the device B in FIG. 2, the communication device 2100 receives, through the physical interface card 2133, a second packet sent by the device having an application identification capability, to store a correspondence between information about a first application and quality guarantee indication information that are included in the second packet. After obtaining a third packet, the communication device 2100 sends the third packet through the physical interface card 2133 based on the correspondence, to provide quality guarantee for the third packet. For example, the second packet and the third packet are packets received through the physical interface card 2133.

Operations performed on the interface board 2140 are consistent with operations performed on the interface board 2130 in this application. For brevity, details are not described again. The communication device 2100 may correspond to the communication device in the foregoing methods. The main control board 2100, the interface board 2130, and/or the interface board 2140 in the communication device 2100 may implement functions of the communication device in the foregoing methods and/or implement various steps. For brevity, details are not described herein again.

Notably, there may be one or more main control boards. When there are a plurality of main control boards, the main control boards may include a primary main control board and a standby main control board. There may be one or more interface boards. A stronger data processing capability of the communication device indicates a larger quantity of provided interface boards. There may also be one or more physical interface cards on the interface board. There may be no switching board or one or more switching boards. When there are a plurality of switching boards, load balancing and redundancy backup may be implemented together. In a centralized forwarding architecture, the communication device may not need the switching board, and the interface board undertakes a service data processing function of an entire system. In a distributed forwarding architecture, the communication device may have at least one switching board, and data is exchanged between the plurality of interface boards through the switching board, to provide a large-capacity data exchange and processing capability Therefore, a data access and processing capability of the communication device in the distributed architecture is greater than the device in the centralized architecture. Optionally, the communication device may alternatively be in a form in which there is only one card. To be specific, there is no switching board, and functions of the interface board and the main control board are integrated on the card. In this case, the central processing unit on the interface board and the central processing unit on the main control board may be combined to form one central processing unit on the card, to perform functions obtained by combining the two central processing units. This form of device (for example, a communication device such as a low-end switch or a router) has a weak data exchange and processing capability. A specific architecture that is to be used depends on a specific networking deployment scenario. This is not limited herein.

**In some possible implementations, the communication device may be implemented as a virtualized device.**

For example, the virtualized device may be a virtual machine (English: Virtual Machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as a first communication device or a second communication device. For example, the communication device may be implemented based on a general-purpose physical server by using a network functions virtualization (Network Functions Virtualization, NFV) technology. The communication device is a virtual host, a virtual router, or a virtual switch. After reading this application, persons skilled in the art may virtualize, on the general-purpose physical server by using the NFV technology, the communication device having the foregoing functions. Details are not described herein again.

For example, the virtualized device may be a container, and the container is an entity configured to provide an isolated virtualized environment. For example, the container may be a docker container. The container may be configured as a communication device. For example, the communication device may be created by using a corresponding image. For example, two container instances, namely, a container instance proxy-container 1 and a container instance proxy-container 2, may be created for a proxy-container (a container that provides a proxy service) by using an image of the proxy-container. The container instance proxy-container 1 is provided as the communication device configured to perform the packet transmission method performed by the device A in FIG. 2. The container instance proxy-container 2 is provided as the communication device configured to perform the packet transmission method performed by the device B in FIG. 2. When a container technology is used for implementation, the communication device may run by using a kernel of a physical machine, and a plurality of communication devices may share an operating system of the physical machine. Different communication devices may be isolated by using the container technology. A containerized communication device may run in the virtualized environment, for example, may run in the virtual machine, or the containerized communication device may directly run in the physical machine.

For example, the virtualized device may be a pod. The pod is a basic unit of Kubernetes (where Kubernetes is an open-source container orchestration engine of Google, and is briefly referred to as K8s in English) for deploying, managing, and orchestrating a containerized application. The pod may include one or more containers. All containers in a same pod are usually deployed on a same host. Therefore, all the containers in the same pod may communicate with each other through the host, and may share storage resources and network resources of the host. The pod may be configured as a communication device. For example, specifically, a container as a service (English full name: container as a service, CaaS for short, which is a container-based PaaS) may be indicated to create the pod, and the pod is provided as the communication device.

Certainly, the communication device may alternatively be another virtualized device. This is not enumerated herein one by one.

**In some possible implementations, the communication device may be implemented by a general-purpose processor.**

For example, the general-purpose processor may be in a form of a chip. Specifically, the general-purpose processor implementing the communication device includes a processing circuit, and an input interface and an output interface that are internally connected to and communicated with the processing circuit. The processing circuit is configured to perform the packet generation step in the foregoing methods through the input interface. The processing circuit is configured to perform the receiving step in the foregoing methods through the input interface. The processing circuit is configured to perform the sending step in the foregoing methods through the output interface. Optionally, the general-purpose processor may further include a storage medium. The processing circuit is configured to perform the storing step in the foregoing methods through the storage medium. The storage medium may store instructions to be executed by the processing circuit. The processing circuit is configured to execute the instructions stored in the storage medium, to perform the foregoing methods.

It can be understood that the processor may be a central processing unit (Central Processing Unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor or any conventional processor or the like. Notably, the processor may be a processor that supports an advanced reduced instruction set computing machines (advanced RISC machines, ARM) architecture.

Further, in an optional implementation, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Refer to FIG. 22. This application provides a packet transmission network system 2200. The packet transmission network system 2200 includes a first device 2201 and a second device 2202. The first device 2201 is configured to: obtain a first packet, and determine that the first packet belongs to a first application for which quality guarantee needs to be provided.

The first device 2201 is further configured to update the first packet to obtain a second packet, where the second packet includes quality guarantee indication information.

The first device 2201 is further configured to send the second packet to the second device 2202.

The second device 2202 is configured to receive the second packet.

The second device 2202 is further configured to store, based on the second packet, a correspondence between information about the first application and the quality guarantee indication information that are included in the second packet.

The second device 2202 is further configured to receive a third packet, where the third packet includes the information about the first application.

The second device 2202 is further configured to provide quality guarantee for the third packet based on the correspondence.

In a possible implementation, the first device 2201 is further configured to: obtain a first identifier of the first application, where the first identifier includes at least one of the following: an application identifier, a user identifier, and a flow identifier; and encapsulate the first identifier into the second packet, where the application identifier identifies an application corresponding to the first packet, the user identifier identifies a user corresponding to the first packet, the flow identifier identifies a packet flow corresponding to the first packet, and the information about the first application includes the first identifier.

In a possible implementation, the second packet received by the second device 2202 is sent by the first device 2201, and the second device 2202 is configured to send the third packet to the first device 2201.

For steps performed by the first device 2201, refer to the foregoing descriptions of the corresponding device A in 201 to 207 and FIG. 2. For steps performed by the second device 2202, refer to the foregoing descriptions of the corresponding device B in 201 to 207 and FIG. 2. Details are not described herein again.

This application provides a communication device. The communication device is configured as a communication device configured to perform the packet transmission method performed by the device B in FIG. 2. The communication device includes a main control board and an interface board. The main control board includes a first processor and a second memory. The interface board includes: a second processor, a second memory, and an interface card. The main control board and the interface board are coupled. The second memory may be configured to store program code. The second processor is configured to invoke the program code in the second memory to perform the following operation: receiving a first packet, where the first packet includes quality guarantee indication information and information about a first application, and the first packet belongs to the first application.

The first memory may be configured to store program code. The first processor is configured to invoke the program code in the first memory to perform the following operation: storing a correspondence between the information about the first application and the quality guarantee indication information based on the first packet.

The second processor is further configured to invoke the program code in the second memory to perform the following operations: receiving a second packet, where the second packet includes the information about the first application; and providing quality guarantee for the second packet based on the correspondence.

In a possible implementation, an inter-process communication (inter-process communication, IPC) channel is established between the main control board and the interface board, and the main control board and the interface board communicate with each other through the IPC channel.

This application provides a communication device for performing the packet transmission method performed by the device A in FIG. 2. The communication device includes a main control board and an interface board. The main control board includes a first processor and a second memory. The interface board includes: a second processor, a second memory, and an interface card. The main control board and the interface board are coupled.

The first memory may be configured to store program code. The first processor is configured to invoke the program code in the first memory to perform the following operations: obtaining a first packet; determining that the first packet belongs to a first application for which quality guarantee needs to be provided; and updating the first packet to obtain a second packet, where the second packet includes quality guarantee indication information.

The second memory may be configured to store program code. The second processor is configured to invoke the program code in the second memory to perform the following operations: sending the second packet to a second device, where the quality guarantee indication information indicates the second device to obtain information about the first application from the first packet, and provide quality guarantee for the packet belonging to the first application.

In a possible implementation, an IPC channel is established between the main control board and the interface board, and the main control board and the interface board communicate with each other through the IPC channel.

This application provides a computer program (product). The computer program (product) includes computer program code; and when the computer program code is run by a computer, the computer is enabled to perform the packet transmission method in 201 to 207 and FIG. 2.

This application provides a computer-readable storage medium for storing a program or instructions. When the program or the instructions are run on a computer, the packet transmission method in FIG. 2 and 201 to 207 is performed.

This application provides a chip. The chip includes a processor, configured to invoke, from a memory, instructions stored in the memory and run the instructions, so that a communication device in which the chip is installed performs the packet transmission method in 201 to 207 and FIG. 2.

This application provides another chip. The chip includes an input interface, an output interface, a processor, and a memory. The input interface, the output interface, the processor, and the memory are connected through an internal connection channel. The processor is configured to execute code in the memory. When the code is executed, the processor is configured to perform the packet transmission method in 201 to 207 and FIG. 2.

All or a part of the foregoing implementations may be implemented by using software, hardware, firmware, or any combination thereof. When software is used to implement the implementations, all or a part of the implementations may be implemented in a form of a computer program product. The computer program product includes one or more computer instructions. When the computer program instructions are loaded and executed on a computer, all or a part of the procedures or functions are generated according to this application. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

In a context of this application, the computer program code or the related data may be carried by any appropriate carrier, so that the device, the apparatus, or the processor can perform various processing and operations described above. An example of the carrier includes a computer-readable medium and the like.

It may be clearly understood by persons skilled in the art that, for a purpose of convenient and brief description, for a detailed working process of the foregoing system, device, and module, refer to a corresponding process in the foregoing methods. Details are not described herein again.

In the several implementations provided in this application, it can be understood that the disclosed system, device, and method may be implemented in other manners. For example, the described device is merely an example. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. Indirect couplings or communication connections between the devices or modules may be electrical connections, mechanical connections, or connections in other forms.

The modules described as separate parts may or may not be physically separate, and parts displayed as modules may or may not be physical modules, may be located in one position, or may be distributed on a plurality of network modules. A part of or all of the modules may be selected based on actual requirements to achieve the objectives of the solutions of this application.

In addition, functional modules in embodiments of this application may be integrated into one processing module, or each of the modules may exist alone physically, or two or more modules are integrated into one module. The integrated module may be implemented in a form of hardware, or may be implemented in a form of a software functional module.

In this application, terms such as "first" and "second" are used to distinguish between same items or similar items that have basically same functions. It can be understood that there is no logical or time sequence dependency between "first", "second", and "n^{th}", and a quantity and an execution sequence are not limited. It can be further understood that although the terms such as "first" and "second" are used in the following descriptions to describe various elements, these elements should not be limited by the terms. These terms are merely used to distinguish one element from another element. For example, without departing from the scope of embodiments, a first device may be referred to as a second device, and similarly the second device may be referred to as the first device. Both the first device and the second device may communicate with each other, and in some cases, may be separate and different devices.

It can be further understood that sequence numbers of the foregoing processes do not mean execution sequences in the implementations of this application. The execution sequences of the processes should be determined based on functions and internal logic of the processes, and should not be construed as any limitation on the implementation processes of this application.

In this application, "at least one" means one or more and "a plurality of" means two or more. The terms "system" and "network" may be used interchangeably in this specification.

It can be understood that determining B based on A does not mean that B is determined based on only A, and B may alternatively be determined based on A and/or other information.

It can be further understood that "one implementation", "an implementation", or "a possible implementation" mentioned throughout this specification means that the implementations or particular features, structures, or characteristics related to the implementations are included in at least one implementation of this application. Therefore, "in one implementation", "in an implementation", or "in a possible implementation" appearing throughout this specification does not necessarily mean a same implementation. In addition, these particular features, structures, or characteristics may be combined in one or more implementations by using any appropriate manner.

In conclusion, the foregoing implementations are merely intended for describing the technical solutions of this application, but not for limiting this application. Although this application is described in detail with reference to the foregoing implementations, persons of ordinary skill in the art should understand that they may still make modifications to the technical solutions described in the foregoing implementations or make equivalent replacements to some technical features thereof, without departing from the scope of the technical solutions of implementations of this application.

## Claims

1. A packet transmission method, wherein the method comprises:
receiving, by a first device, a first packet, wherein the first packet comprises quality guarantee indication information and information about a first application, and the first packet belongs to the first application;
storing a correspondence between the information about the first application and the quality guarantee indication information based on the first packet;
receiving, by the first device, a second packet, wherein the second packet comprises the information about the first application; and
providing quality guarantee for the second packet based on the correspondence.

2. The method according to claim 1, wherein the quality guarantee indication information comprises a service level agreement SLA requirement and/or an SLA guarantee identifier.

3. The method according to claim 1 or 2, wherein the first packet comprises an internet protocol version 6 IPv6 packet, and the quality guarantee indication information is located in a packet header of the IPv6 packet.

4. The method according to claim 3, wherein the quality guarantee indication information is located in an application-aware IPv6 networking APN6 packet header of the IPv6 packet, and the APN6 packet header is located in an IPv6 extension header.

5. The method according to claim 4, wherein the APN6 packet header comprises an APN6 basic header, and the quality guarantee indication information is located in the APN6 basic header; or
the APN6 packet header comprises an APN6 parameter extension header, and the quality guarantee indication information is located in the APN6 extension header.

6. The method according to claim 4, wherein the quality guarantee indication information comprises the SLA requirement and the SLA guarantee identifier, the APN6 packet header comprises an APN6 basic header and an APN6 parameter extension header, the SLA requirement is located in the APN6 basic header, and the SLA guarantee identifier is located in the APN6 parameter extension header; or
the SLA requirement is located in the APN6 parameter extension header, and the SLA guarantee identifier is located in the APN6 basic header.

7. The method according to any one of claims 1 to 6, wherein the information about the first application comprises transmission information of the first packet, and the transmission information of the first packet comprises IP tuple information of the first packet.

8. The method according to any one of claims 1 to 7, wherein the providing quality guarantee for the second packet based on the correspondence comprises:
determining, by the first device based on the quality guarantee indication information, a forwarding path corresponding to the first application, and sending the second packet on the forwarding path.

9. The method according to any one of claims 1 to 8, wherein before the providing quality guarantee for the second packet based on the correspondence, the method further comprises:
encapsulating the quality guarantee indication information into the second packet.

10. The method according to any one of claims 1 to 9, wherein the information about the first application comprises a first identifier, the first identifier comprises at least one of the following: an application identifier, a user identifier, and a flow identifier, the application identifier identifies the first application, the user identifier identifies a user corresponding to the first packet, and the flow identifier identifies a packet flow corresponding to the first packet.

11. The method according to any one of claims 1 to 10, wherein the first packet received by the first device is sent by a second device, and the providing quality guarantee for the second packet based on the correspondence comprises:
sending, by the first device, the second packet to the second device.

12. A packet transmission method, wherein the method comprises:
obtaining, by a first device, a first packet;
determining, by the first device, that the first packet belongs to a first application for which quality guarantee needs to be provided
updating, by the first device, the first packet to obtain a second packet, wherein the second packet comprises information about the first application and quality guarantee indication information; and
sending, by the first device, the second packet to a second device, wherein the quality guarantee indication information indicates the second device to provide quality guarantee for the packet belonging to the first application.

13. The method according to claim 12, wherein the quality guarantee indication information comprises a service level agreement SLA requirement and/or an SLA guarantee identifier.

14. The method according to claim 12 or 13, wherein the updating, by the first device, the first packet to obtain a second packet further comprises:
obtaining, by the first device, a first identifier of the first application, wherein the first identifier comprises at least one of the following: an application identifier, a user identifier, and a flow identifier; and encapsulating the first identifier into the second packet, wherein the application identifier identifies an application corresponding to the first packet, the user identifier identifies a user corresponding to the first packet, the flow identifier identifies a packet flow corresponding to the first packet, and the information about the first application comprises the first identifier.

15. A packet transmission network system, wherein the network system comprises a first device and a second device, wherein the first device is configured to obtain a first packet, and determine that the first packet belongs to a first application for which quality guarantee needs to be provided;
the first device is further configured to update the first packet to obtain a second packet, wherein the second packet comprises information about the first application quality guarantee indication information;
the first device is further configured to send the second packet to the second device;
the second device is configured to receive the second packet;
the second device is further configured to store, based on the second packet, a correspondence between the information about the first application and the quality guarantee indication information that are comprised in the second packet;
the second device is further configured to receive a third packet, wherein the third packet comprises the information about the first application; and
the second device is further configured to provide quality guarantee for the third packet based on the correspondence.

16. The network system according to claim 15, wherein the first device is further configured to: obtain a first identifier of the first application, wherein the first identifier comprises at least one of the following: an application identifier, a user identifier, and a flow identifier; and encapsulate the first identifier into the second packet, wherein the application identifier identifies an application corresponding to the first packet, the user identifier identifies a user corresponding to the first packet, the flow identifier identifies a packet flow corresponding to the first packet, and the information about the first application comprises the first identifier.

17. The network system according to claim 15 or 16, wherein the second packet received by the second device is sent by the first device, and the second device is configured to send the third packet to the first device.

18. A packet transmission device, wherein the device comprises a memory and a processor; the memory stores at least one instruction, and the at least one instruction is loaded and executed by the processor to implement the packet transmission method according to any one of claims 1 to 14.

19. A computer-readable storage medium, wherein the storage medium stores at least one instruction, and the instruction is loaded and executed by a processor to implement the packet transmission method according to any one of claims 1 to 14.
